(19) Europäisches Patentamt / European Patent Office / Office européen des brevets

(11) **EP 2 795 287 B1**

(12) **EUROPÄISCHE PATENTSCHRIFT**

(45) Veröffentlichungstag und Bekanntmachung des Hinweises auf die Patenterteilung:
**14.02.2018 Patentblatt 2018/07**

(51) Int Cl.:
**G01N 9/00** (2006.01)    **G01F 1/84** (2006.01)

(21) Anmeldenummer: **12798227.0**

(22) Anmeldetag: **22.11.2012**

(86) Internationale Anmeldenummer:
**PCT/EP2012/073366**

(87) Internationale Veröffentlichungsnummer:
**WO 2013/092104 (27.06.2013 Gazette 2013/26)**

(54) **VERFAHREN BZW. MESSSYSTEM ZUM ERMITTELN EINER DICHTE EINES FLUIDS**

METHOD AND MEASUREMENT SYSTEM FOR DETERMINING A DENSITY OF A FLUID

PROCÉDÉ OU SYSTÈME DE MESURE PERMETTANT DE DÉTERMINER LA DENSITÉ D'UN FLUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2011 DE 102011089808**

(43) Veröffentlichungstag der Anmeldung:
**29.10.2014 Patentblatt 2014/44**

(73) Patentinhaber: **Endress+Hauser Flowtec AG 4153 Reinach (BL) (CH)**

(72) Erfinder:
• **VAN DIJK, Coen**
  **CH-4105 Biel-Benken (CH)**
• **MOMENTE, Omar**
  **CH-4147 Aesch (CH)**
• **HAGENMEYER, Heinerich**
  **79639 Grenzach-Wyhlen (DE)**

(74) Vertreter: **Andres, Angelika Maria Endress+Hauser (Deutschland) AG+Co. KG PatServe Colmarer Strasse 6 79576 Weil am Rhein (DE)**

(56) Entgegenhaltungen:
WO-A2-2004/053428     WO-A2-2007/095547
DE-A1- 3 744 325       US-A1- 2011 219 872
US-A1- 2011 224 940    US-B2- 6 845 663

## Beschreibung

Die Erfindung betrifft ein Verfahren zum Ermitteln einer Dichte, p, eines einen schwingfähig gehalterten, zu Vibrationen anregbaren Vibrationskörper kontaktierenden Fluids sowie ein entsprechendes zur Durchführung des Verfahrens geeignetes Meßsystem.

In der industriellen Prozeß-Meßtechnik werden zum Ermitteln einer Dichte von in einer Rohrleitung strömenden Fluids oder eines in einem Behälter gelagerten Fluids oftmals solche Meßsysteme verwendet, bei denen ein schwingfähig gehalterter, zu Vibrationen anregbarer Vibrationskörper eines physikalisch-elektrischen Meßwandlers mit dem zu messenden Fluid, nämlich mit einem Teilvolumen davon, in Kontakt gebracht und bei denen der - von Fluid kontaktierte - Vibrationskörpers im Betrieb derart vibrierengelassen wird, beispielsweise aktiv mittels eines auf den Vibrationskörper einwirkenden elektro-mechanischen Schwingungserregers, daß der Vibrationskörper zumindest anteilig Resonanzschwingungen, nämlich mechanische Schwingungen mit einer Resonanzfrequenz, die von dessen mechanischen Aufbau wie auch von der Dichte des Fluids abhängig ist, ausführt. Der Meßwandler ist dafür zumeist in eine Behälterwand des das Fluid jeweils führenden Behälters, beispielsweise einem Tank, bzw. in den Verlauf einer das Fluid jeweils führenden Leitung, beispielsweise eine Rohrleitung, eingesetzt und im weiteren auch dafür eingerichtet, Vibrationen des Vibrationskörpers zu Erfassen und wenigstens ein Schwingungsmeßsignals, das wenigstens eine Signalkomponente mit einer der Resonanzfrequenz entsprechenden, mithin von der Dichte des Fluids abhängigen Signalfrequenz aufweist, zu erzeugen. Beispiele für derartige, mittels einem oder mehreren Vibrationskörper(n) gebildete, mithin für die Messung der Dichte geeignete Meßwandler bzw. Meßsysteme sind u.a. in der EP-A 564 682, der EP-A 919 793, der US-A 2007/0028663, der US-A 2008/0127745, der US-A 2010/0083752, der US-A 2010/0236323, der US-A 2011/0219872, der US-A 45 24 610, der US-A 48 01 897, der US-A 50 27 662, der US-A 50 54 326, der US-A 57 96 011, der US-A 59 65 824, der US-A 60 73495, der US-A 61 38 507, der US-A 61 48 665, der US-B 60 44 694, der US-B 63 89 891, der US-B 66 51 513, der US-B 66 88 176, der US-B 67 11 942, der US-B 68 45 663, der US-B 69 12904, der US-B 69 38 475, der US-B 70 40 179, der US-B 71 02 528, der US-B 72 72 525, der US-B 75 49 319, der US-B 76 81 445, der US-B 78 74 199, der WO-A 00/19175, der WO-A 01/02816, der WO-A 01/29519, der WO-A 88/02853, der WO-A 93/01473, der WO-A 93/19348, der WO-A 93/21505, der WO-A 94/21999, der WO-A 95/03528, der WO-A 95/16897, der WO-A 95/29385 oder der WO-A 98/02725 beschrieben. Demnach der Vibrationskörper z.B. ein in den Verlauf der das Fluid führenden Leitung eingesetztes, mithin vom Fluid durchströmtes Meßrohr - etwa von einem Meßwandler eines als reines Dichte-Meßgerät für strömende Fluide, eines als Coriolis-Massedurchfluß-/-Dichte-Meßgerät und/oder eines als Dichte-/Viskositäts-Meßgerät ausgebildeten Meßsystems - oder aber z.B. auch mittels eines in das - in einer Leitung oder einem Behälter befindliche - Fluid eintauchenden, ggf. auch stab- oder paddelförmig und/oder innen hohl ausgebildeten, Schwingzylinders gebildet, mithin z.B. auch von einem zusätzlich zu einem Füllstandsgrenzstand auch die Dichte messenden vibronischen Füllstandsgrenzschalter bereitgestellt sein.

Der Meßwandler ist ferner mit einer der Auswertung des wenigstens einen Schwingungsmeßsignals und der Generierung entsprechender, die Dichte repräsentierender Dichte-Meßwerte dienenden Elektronik des Meßsystems verbunden. Bei modernen Meßsystemen in Rede stehenden Art sind solche Elektroniken, wie u.a. auch in der US-B 63 11 136 oder der US-A 60 73 495 beschrieben, zumeist mittels eines oder mehreren, ggf. auch als digitalen Signalprozessor (DSP) ausgebildeten Mikroprozessoren realisiert. Neben der Auswertung des wenigstens einen vom Meßwandler gelieferten, Schwingungen von dessen Vibrationskörper repräsentierenden Schwingungsmeßsignals dient die Elektronik auch dazu, wenigstens ein, beispielsweise harmonisches und/oder getaktetes, Treibersignal für einen auf den Vibrationskörper einwirkenden, dem aktiven Anregen nämlicher Schwingungen dienenden elektro-mechanischen Schwingungserreger, beispielsweise eine mit einem am Vibrationskörper fixierten Permanentmagneten wechselwirkende Erregerspule oder einem am Vibrationskörper fixierten Piezoelement, zu generieren, wobei das Treibersignal eine Signalkomponente mit einer zur Resonanzfrequenz des Vibrationskörper passenden Signalfrequenz aufweist. Nämliche Signalkomponente bzw. das Treibersignal können beispielsweise auch hinsichtlich einer Stromstärke und/oder einer Spannungshöhe geregelt sein.

Bei Meßsystemen der in Rede stehenden Art ist die Elektronik zumeist innerhalb wenigstens eines vergleichsweise robusten, insb. schlag-, druck-, und/oder wetterfesten, Elektronik-Gehäuse untergebracht. Das Elektronik-Gehäuse kann beispielsweise vom Meßwandler entfernt angeordnet und mit diesem nur über eine flexible Leitung verbunden sein; es kann aber auch, wie z.B. auch in den eingangs erwähnten US-A 57 96 011 gezeigt, direkt am Meßwandler oder einem den Meßwandler, mithin dessen Vibrationskörper separat einhausenden Meßwandler-Gehäuse angeordnet sein. Darüberhinaus ist aber, wie u.a. in der WO-A 01/29519 gezeigt, auch durchaus üblich, ggf. auch in zwei oder mehr separaten Gehäuse-Modulen untergebrachte, modular ausgebildeten Elektroniken zur Bildung von Meßsystem der in Rede stehenden Art zu verwenden.

Bei Meßsystemen der in Rede stehenden Art ist die jeweilige Elektronik üblicherweise über entsprechende elektrische Leitungen an ein vom jeweiligen Gerät zumeist räumlich entfernt angeordnetes und zumeist auch räumlich verteiltes übergeordneten elektronischen Datenverarbeitungssystem elektrisch angeschlossen, an das die vom jeweiligen Meßsystem erzeugten Meßwerte mittels eines diese entsprechend tragenden Meßwertesignals zeitnah weitergegeben werden. Meßsysteme der in Rede stehenden Art der beschriebenen Art sind zudem üblicherweise mittels eines innerhalb des übergeordneten Datenverarbeitungssystems vorgesehenen Datenübertragungsnetzwerks miteinander und/oder mit entsprechenden elektronischen Prozeß-Steuerungen verbunden, beispielsweise vor Ort installierte Speicherprogrammierbare Steuerungen oder in einer entfernten Leitwarte installierte Prozeß-Leitrechnern, wohin die mittels des jeweiligen Meßsystems erzeugten und in geeigneter Weise digitalisierten und entsprechend codierten Meßwerte weitergesendet werden. Mittels solcher Prozeß-Leitrechner können die übertragenen Meßwerte weiterverarbeitet und als entsprechende Meßergebnisse z.B. auf Monitoren visualisiert und/oder in Steuersignale für andere als Stellgeräte ausgebildete Feldgeräte, wie z.B. Magnet-Ventile, Elektro-Motoren etc., umgewandelt werden. Da moderne Meßanordnungen zumeist auch direkt von solchen Leitrechnern aus überwacht und gegebenenfalls gesteuert und/oder konfiguriert werden können, werden in entsprechender Weise über vorgenannte, zumeist hinsichtlich der Übertragungsphysik und/oder der Übertragungslogik hybride Datenübertragungsnetzwerke dem Meßsystem zugewiesene Betriebsdaten gleichermaßen versendet. Dementsprechend dient das Datenverarbeitungssystem üblicherweise auch dazu, das vom Meßsystem gelieferte Meßwertesignal entsprechend den Anforderungen nachgelagerter Datenübertragungsnetzwerke zu konditionieren, beispielsweise geeignet zu digitalisieren und gegebenenfalls in ein entsprechendes Telegramm umzusetzen, und/oder vor Ort auszuwerten. Dafür sind in solchen Datenverarbeitungssystemen mit den jeweiligen Verbindungsleitungen elektrisch gekoppelte Auswerteschaltungen vorgesehen, die die vom jeweiligen Meßsystem empfangenen Meßwerte vor- und/oder weiterverarbeiten sowie, falls erforderliche, geeignet konvertieren. Zur Datenübertragung dienen in solchen industriellen Datenverarbeitungssystemen zumindest abschnittsweise, insb. serielle, Feldbusse, wie z.B. FOUNDATION FIELDBUS, RACKBUS-RS 485, PROFIBUS etc., oder beispielsweise auch Netzwerke auf Basis des ETHERNET-Standards sowie die entsprechenden, zumeist übergreifend standardisierten Übertragungs-Protokolle. Alternativ oder in Ergänzung können bei modernen Me0systeme der in Rede stehenden Art Meßwerte auch drahtlos per Funk an das jeweilige Datenverarbeitungssystem übermittelt werden.

Neben den für die Verarbeitung und Konvertierung der von den jeweils angeschlossenen Meßsystem gelieferten Meßwerte erforderlichen Auswerteschaltungen weisen solche übergeordnete Datenverarbeitungssysteme zumeist auch der Versorgung der angeschlossenen Meß- und/oder Schaltgräte mit elektrischer Energie dienende elektrische Versorgungsschaltungen auf, die eine entsprechende, ggf. direkt vom angeschlossenen Feldbus gespeiste, Versorgungsspannung für die jeweilige Elektronik bereitstellen und die daran angeschlossenen elektrische Leitungen sowie die jeweiligen Elektroniken durchfließende elektrische Ströme treiben. Eine Versorgungsschaltung kann dabei beispielsweise genau einem Meßsystem bzw. einer entsprechenden Elektronik jeweils zugeordnet und zusammen mit der dem jeweiligen Meßsystem zugeordneten Auswerteschaltung - beispielsweise zu einem entsprechenden Feldbusadapter vereint - in einem gemeinsamen, z.B. als Hutschienen-Modul ausgebildeten, Elektronik-Gehäuse untergebracht sein. Es ist aber durchaus auch üblich, Versorgungsschaltungen und Auswerteschaltungen jeweils in separaten, ggf. voneinander räumlich entfernten Elektronik-Gehäusen unterzubringen und über externe Leitungen miteinander entsprechend zu verdrahten.

Bei mittels eines Vibrationskörpers gebildeten Meßsystemen zur Dichtemessung ist, wie u.a. den eingangs erwähnten US-B 70 40 179, WO-A 88/02853, WO-A 98/02725, WO-A 94/21999 oder US-B 70 40 179 entnehmbar, bei der Ermittlung der Dichte $\rho$, basierend auf den Resonanzschwingungen des Vibrationskörpers bzw. dessen Resonanzfrequenz $f_r$, die Vibrationskörper-Temperatur $\vartheta_{10}$, also eine von einer Temperatur des zu messenden Fluids abhängige, mithin veränderliche Temperatur des Vibrationskörpers, zu berücksichtigen. Zur Ermittlung derselben wird eine lokale Temperatur $\vartheta_{sens}$ des Vibrationskörpers auf einer dem Fluid abgewandeten, mithin davon nicht kontaktierten "trockenen" Oberfläche des Vibrationskörpers sensorisch erfaßt, üblicherweise mittels eines darauf aufgeklebten Platin-Widerstandes eines Widerstandsthermometers oder eines auf nämliche Oberfläche aufgeklebten Thermoelements sowie einer entsprechenden Meßschaltung in der Elektronik, und hernach bei der Ermittlung entsprechend berücksichtigt, etwa gemäß den Abhängigkeiten $\vartheta_{sens} \sim \vartheta_{10}$, $f_r^2 = f(\vartheta_{sens} \rightarrow \vartheta_{10})$ bzw. $f_r^2 = f(1/\rho)$. Eine weitere Verbesserung der Genauigkeit, mit der die Dichte schlußendlich gemessen werden kann, kann bei Meßsystemen der in Rede stehenden Art, nicht zuletzt bei solchen mit einem an seinen beiden Enden eingespannten Meßrohr als Vibrationskörper, u.a. dadurch erreicht werden, daß, wie u.a. auch der US-A 2011/0219872 erwähnt, ferner auch mechanische Deformierungen des in statischer Ruhelage befindlichen Vibrationskörpers, etwa infolge einer sich ändernden Vibrationskörper-Temperatur und/oder infolge von auf den Vibrationskörper einwirkenden Kräften, bzw. daraus resultierende mechanische Spannungen innerhalb des Vibrationskörpers erfassen und entsprechend bei der Berechnung der Dichte zu berücksichtigt werden. Solche mechanischen Deformierungen des Vibrationskörpers können beispielsweise mittels eines oder mehreren mit dem Vibrationskörper über dessen "trockene" Oberfläche mechanisch gekoppelte Dehnungssensor(en) erfaßt werden.

Weiterführende Untersuchungen an Meßsystemen der in Rede stehenden Art haben allerdings ergeben, daß anhand der gemessenen Temperatur $\vartheta_{10}$ und Resonanzfrequenz $f_r$ die Dichte $\rho$ von Fluiden mit zeitlich über einen längeren Zeitraum von einigen Minuten oder mehr jeweils konstant bleibender Temperatur zwar sehr genau, nämlich ohne weiteres mit einem relativen Meßfehler von weniger als 0,2%, ermittelt werden kann, jedoch besonders im Falle eines Wechsels des Fluids in der Leitung die für das "neue" Fluids gemessene Dichte zunächst erheblichen von dessen tatsächlicher Dichte abweichen kann; dies - auch bei Verwendung von Dehnungssensoren - unglücklicherweise gelegentlich sogar derart, daß bei einem Fluid mit einer gegenüber dem vorherigen Fluid eigentlich verringerter Dichte zunächst eine höhere Dichte als zuvor ermittelt wird, bzw. auch umgekehrt trotz größerer Dichte für das "neue" Fluid zunächst eine kleinere Dichte ermittelt wird, mithin der Meßfehler für die Dichte im Vergleich zu deren Änderung ein entgegengesetztes Vorzeichen aufweist bzw. das Meßsystem insoweit eine Allpaßcharakteristik aufweist.

Dem Rechnung tragend besteht eine Aufgabe der Erfindung darin, ein Verfahren zum Ermitteln einer Dichte eines Fluids mittels eines davon kontaktierten Vibrationskörpers, welches Verfahren auch unmittelbar nachdem nämliches Fluids als Ersatz für ein anderes an den Vibrationskörper herangeführt worden ist. Dies möglichst auch unter Beibehaltung herkömmlicher Vibrationskörper bzw. herkömmlicher, dem Erfassen der Vibrationskörper-Temperatur dienenden Sensoranordnungen.

Zur Lösung der Aufgabe besteht die Erfindung in einem Verfahren zum Ermitteln einer Dichte eines einen schwingfähig gehalterten, zu Vibrationen anregbaren, beispielsweise aus Metall bestehenden, Vibrationskörper kontaktierenden Fluids, wobei dem Vibrationskörper eine spezifischen Wärmeleitfähigkeit beispielsweise von mehr als 5 W $K^{-1} m^{-1}$, mithin ein davon abhängiger, für einen Wärmedurchgang von einer das Fluid berührenden ersten Oberfläche des Vibrationskörpers, die eine Fluid-Temperatur, nämlich eine Temperatur des die ersten Oberfläche kontaktierenden Fluids, aufweist, bis zu einer das Fluid nicht kontaktierenden zweiten Oberfläche wirksamer Wärmeleitwert und eine Wärmekapazität innewohnt, und wobei eine Vibrationskörper-Temperatur nämlich eine von der Fluid-Temperatur abhängigen Temperatur des Vibrationskörpers, veränderlich ist. Das Verfahren umfaßt Schritte des Vibrierenlassens des von Fluid kontaktierten Vibrationskörpers in der Weise, daß er zumindest anteilig Resonanzschwingungen, nämlich mechanische Schwingungen mit einer von der Dichte des die erste Oberfläche des Vibrationskörpers kontaktierenden Fluids wie auch von der Vibrationskörper-Temperatur abhängigen Resonanzfrequenz ausführt, sowie des Erfassens von Vibrationen des Vibrationskörpers zum Erzeugen wenigstens eines Schwingungsmeßsignals, das wenigstens eine Signalkomponente mit einer der Resonanzfrequenz entsprechenden, mithin von der Dichte des Fluids abhängigen Signalfrequenz aufweist, des Verwendens eines mit dem Vibrationskörper über dessen zweite Oberfläche thermisch gekoppelten Temperatursensors zum Erzeugen eines einen zeitlichen Verlauf einer Vibrationskörper-Temperatur, nämlich einer von einer Temperatur des den Vibrationskörper an dessen erster Oberfläche kontaktierenden Fluids abhängigen Temperatur des Vibrationskörpers, repräsentierenden Temperaturmeßsignals, wobei Temperaturmeßsignal, nicht zuletzt bedingt durch den Wärmeleitwert und die Wärmekapazität des Vibrationskörpers, einer, beispielsweise aus einer Änderung der Temperatur des den Vibrationskörper an dessen erster Oberfläche kontaktierenden Fluids und/einem Fluidaustausch resultierenden, Änderung der Vibrationskörper-Temperatur von einem anfänglichen ersten Temperaturwert auf einen zweiten Temperaturwert lediglich zeitverzögert folgt, mithin nämlichem zweiten Temperaturwert lediglich zeitverzögert entspricht. Ferner umfaßt das erfindungsgemäße Verfahren einen Schritt des Erzeugens eines die Dichte repräsentierenden Dichte-Meßwerts basierend auf dem Schwingungsmeßsignal sowie dem Temperaturmeßsignal während einer, beispielsweise aus einer Änderung des Temperatur des Vibrationskörpers an dessen erster Oberfläche resultierenden, Änderung der Vibrationskörper-Temperatur, und zwar derart, daß eine während des Erzeugens des Dichte-Meßwerts zwischen dem zeitlichen Verlauf der Vibrationskörper-Temperatur und dem Temperaturmeßsignal auftretende, insb. zeitabhängige, Diskrepanz berücksichtigt ist, beispielsweise auch zumindest teilweise kompensiert ist.

Ferner besteht die Erfindung in einem Meßsystem zum Ermitteln einer Dichte eines, beispielsweise in einer Rohrleitung strömenden, Fluids gemäß dem Verfahren der Erfindung, welches Meßsystem einen Meßwandler mit wenigstens einem, beispielsweise aus Metall bestehenden, Vibrationskörper, der schwingfähig gehaltert und dafür eingerichtet ist, an einer ersten Oberfläche derart von zu messenden Fluid kontaktiert, daß die erste Oberfläche eine Fluid-Temperatur, nämlich eine Temperatur des die ersten Oberfläche kontaktierenden Fluids, annimmt, und derart vibrierengelassen zu werden, daß er zumindest anteilig Resonanzschwingungen, nämlich mechanische Schwingungen mit einer von der Dichte des Fluids abhängigen Resonanzfrequenz, ausführt, und der eine spezifischen Wärmeleitfähigkeit, $\lambda_{10}$, beispielsweise von mehr als 5 W $K^{-1} m^{-1}$, mithin einen davon abhängigen, für einen Wärmedurchgang von der ersten Oberfläche, bis zu einer das Fluid nicht kontaktierenden zweiten Oberfläche wirksamen Wärmeleitwert, $\Lambda_{10}$, und eine Wärmekapazität, $C_{10}$, aufweist, mit wenigstens einen Schwingungssensor zum Erfassen von Vibrationen des Meßrohrs und zum Erzeugen eines Schwingungsmeßsignals, das wenigstens eine Signalkomponente mit einer von der Dichte des Fluids abhängigen Signalfrequenz aufweist, und mit einem mit der zweiten Oberfläche des Vibrationskörpers thermisch gekoppelten Temperatursensor zum Erfassen einer von der Fluid-Temperatur abhängigen Temperatur an der zweiten Oberfläche des Vibrationskörpers, und zum Erzeugen eines einen zeitlichen Verlauf einer Vibrationskörper-Temperatur, nämlich eine von der Fluid-Temperatur abhängigen Temperatur des Vibrationskörpers, repräsentierenden Temperaturmeßsignals umfaßt, wobei das Temperaturmeßsignal, nicht zuletzt bedingt durch den Wärmeleitwert, $\Lambda_{10}$, und die Wärmekapazität, $C_{10}$, des Vibrationskörpers, einer, etwa aus einer Änderung der Temperatur des den Vibrationskörper an dessen erster Oberfläche kontaktierenden Fluids und/einem Fluidaustausch resultierenden, Änderung der Vibrationskörper-Temperatur von einem anfänglichen ersten Temperaturwert auf einen zweiten Temperaturwert lediglich zeitverzögert folgt, mithin nämlichem zweiten Temperaturwert lediglich zeitverzögert entspricht. Das Meßsystem umfaßt weiters eine mit dem Meßwandler elektrische verbundene Elektronik zum Verarbeiten des Schwingungsmeßsignals und des Temperaturmeßsignals sowie zum Generieren eines die Dichte des Fluids repräsentierenden Dichte-Meßwerts, basierend auf sowohl dem Schwingungs- als auch dem Temperaturmeßsignal. Die Elektronik des erfindungsgemäßen Meßsystems ist ferner dafür eingerichtet, eine während des Generierens des Dichte-Meßwerts zwischen dem zeitlichen Verlauf der Vibrationskörper-Temperatur und dem Temperaturmeßsignal auftretende, insb. zeitabhängige, Diskrepanz zu berücksichtigen, insb. derart, daß nämliche Diskrepanz zumindest teilweise kompensiert wird.

Das Verfahren der Erfindung, umfaßt weiters einen Schritt des Verwendens des Schwingungsmeßsignals zum Erzeugen eines die Resonanzfrequenz des vom Fluid kontaktierten Vibrationskörpers repräsentierenden Frequenz-Meßwerts. Ferner umfaßt das Verfahren einen Schritt des Verwendens des Temperaturmeßsignals zum Erzeugen eines die Vibrationskörper-Temperatur repräsentierenden Temperatur-Meßwerts sowie einen Schritt des Verwendens sowohl des Frequenz-Meßwerts als auch des Temperatur-Meßwerts zum Erzeugen eines die Dichte repräsentierenden Dichte-Meßwerts.

Desweiteren umfaßt das Verfahren der Erfindung einen Schritt des Erzeugens einer Frequenz-Abtastfolge, nämlich einer Sequenz von basierend auf dem wenigstens einen Schwingungsmeßsignal zu verschiedenen Zeitpunkten ermittelten digitalen

Frequenzwerten, die einen zeitlichen Verlauf der Resonanzfrequenz des Vibrationskörpers approximiert. Ferner ist vorgesehen, die Frequenz-Abtastfolge zum Erzeugen einer verzögerten Frequenz-Abtastfolge, nämlich einer Sequenz von basierend auf der Frequenz-Abtastfolge zu verschiedenen Zeitpunkten ermittelten digitalen Frequenzwerten, die den zeitlichen Verlauf der Resonanzfrequenz des Vibrationskörpers approximiert, zu verwenden, derart, daß sich nämliche verzögerte Frequenz-Abtastfolge einem auf eine, beispielsweise sprungförmige, Änderung der Resonanzfrequenz folgenden zeitlichen Verlauf der Resonanzfrequenz langsamer annähert, als die Frequenz-Abtastfolge.

Nach einer ersten Ausgestaltung des Verfahrens der Erfindung umfaßt dieses weiters einen Schritt des Erzeugens einer Oberflächen-Temperatur-Abtastfolge, nämlich einer Sequenz von basierend auf dem wenigstens einen Temperaturmeßsignal zu verschiedenen Zeitpunkten ermittelten digitalen Temperaturwerten, die einen zeitlichen Verlauf der Temperatur an der zweiten Oberfläche des Vibrationskörpers approximiert.

Nach einer zweiten Ausgestaltung des Verfahrens der Erfindung umfaßt dieses weiters einen Schritt des Erzeugens einer Vibrationskörper-Temperatur-Schätzfolge, nämlich einer Sequenz von basierend auf dem wenigstens einen Temperaturmeßsignal zu verschiedenen Zeitpunkten ermittelten digitalen Temperaturwerten, die einen zeitlichen Verlauf der Vibrationskörper-Temperatur approximiert, derart, daß sich nämliche Vibrationskörper-Temperatur-Schätzfolge einem auf eine, beispielsweise sprungförmige und/oder aus einer Änderung der Fluid-Temperatur resultierende, Änderung der Temperatur an der zweiten Oberfläche des Vibrationskörpers folgenden zeitlichen Verlauf der Vibrationskörper-Temperatur schneller annähert, als das Temperaturmeßsignal.

Nach einer dritten Ausgestaltung des Verfahrens der Erfindung umfaßt dieses weiters einen Schritt des Verwendens eines mit dem Vibrationskörper über dessen zweite Oberfläche mechanisch gekoppelten Dehnungssensors zum Erzeugen eines einen zeitlichen Verlauf einer Vibrationskörper-Deformierung, nämlich einer von der Vibrationskörper-Temperatur und/oder einer auf diesen einwirkenden Kraft abhängigen Deformation des Vibrationskörpers, repräsentierenden Deformierungsmeßsignals. Diese Ausgestaltung der Erfindung weiterbildend ist ferner vorgesehen eine Deformierungs-Abtastfolge, nämlich eine Sequenz von basierend auf dem wenigstens einen Deformierungsmeßsignals zu verschiedenen Zeitpunkten ermittelten digitalen Deformierungsmeßwerten, die einen zeitlichen Verlauf der Vibrationskörper-Deformierung approximiert, zu erzeugen und zum Erzeugen des Dichte-Meßwerts zu verwenden.

Nach einer vierten Ausgestaltung der Erfindung ist ferner vorgesehen, daß der Vibrationskörper ein schwingfähig gehaltertes Meßrohr mit einem von einer, insb. aus Metall bestehende, Rohrwand umgebenen Lumen, ist. Diese Ausgestaltung der Erfindung weiterbildend ist das Meßrohr ferner dafür eingerichtet, in Fluid eingetaucht zu werden, derart, daß die das Fluid berührenden erste Oberfläche des Vibrationskörpers von einer Außenfläche der Rohrwand und die das Fluid nicht kontaktierende zweite Oberfläche des Vibrationskörpers von einer dem Lumen zugewandten Innenfläche der Rohrwand gebildet sind. Alternativ dazu kann das Meßrohr aber auch dafür eingerichtet sein, beispielsweise strömendes, Fluid zu führen, wobei die das Fluid berührenden erste Oberfläche des Vibrationskörpers von einer dem Lumen zugewandten Innenfläche der Rohrwand und die das Fluid nicht kontaktierende zweite Oberfläche des Vibrationskörpers von einer Außenfläche der Rohrwand gebildet sind,

Nach einer fünften Ausgestaltung der Erfindung ist der Vibrationskörper dafür eingerichtet, Fluid zu führen bzw. von Fluid durchströmt zu werden.

Nach einer sechsten Ausgestaltung der Erfindung ist der Vibrationskörper dafür eingerichtet, in Fluid eingetaucht bzw. von Fluid angeströmt zu werden. Diese Ausgestaltung der Erfindung weiterbildend ist ferner vorgesehen, daß der Vibrationskörper eine schwingfähig gehalterte Membran aufweist, und daß die das Fluid berührenden erste Oberfläche des Vibrationskörpers mittels einer ersten Membranfläche und die das Fluid nicht kontaktierende zweite Oberfläche von einer der ersten zweiten Membranfläche gegenüberliegenden zweiten Membranfläche gebildet sind. Bei dieser Ausgestaltung der Erfindung kann der Vibrationskörper weiters beispielsweise auch ein an der ersten Membranfläche fixiertes, mithin in das Fluid eintauchendes Paddel aufweisen.

Ein Grundgedanke der Erfindung besteht darin, Meßsystemen der in Rede stehenden Art innwohnende, bislang jedoch nicht erkannte dynamische Meßfehler, wie sie während eines hinsichtlich der Vibrationskörper-Temperatur insationären Übergangszeitraums - etwa infolge eines Fluidaustauschs und/oder infolge einer signifikanten Änderung der Fluidtemperatur - auftreten können, durch entsprechendes Korrigieren der gemessenen Resonanzfrequenz und/oder der am Vibrationskörper gemessene Temperatur zumindest teilweise zu kompensieren, nämlich durch nachträgliches Anpassen des zeitlichen Verlaufs der gemessenen Resonanzfrequenz an den relativ zur gemessenen Resonanzfrequenz regelmäßig nachlaufenden zeitlichen Verlauf der gemessenen Temperatur, ggf. zusätzlich auch durch nachträgliches Anpassen des zeitlichen Verlaufs der gemessenen Temperatur an den relativ zur gemessenen Temperatur vorauseilenden zeitlichen Verlauf der gemessenen Resonanzfrequenz.

Die Erfindung sowie weitere vorteilhafte Ausgestaltungen davon werden nachfolgend anhand von Ausführungsbeispielen näher erläutert, die in den Figuren der Zeichnung dargestellt sind. Gleiche Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung wie auch den Unteransprüchen an sich.

Im einzelnen zeigen:

Fig. 1, 2      ein - hier als Kompakt-Meßgerät ausgebildetes - Meßsystem der industriellen Meß- und Automatisierungstechnik für die Messung einer Dichte eines in einer Rohrleitung strömenden Fluids;

Fig. 3      schematisch nach Art eines Blockschaltbildes ein Meßsystem gemäß Fig. 1 mit einer Elektronik und einem daran angeschlossenen Meßwandler;

Fig. 4      schematisch eine Prinzipskizze einer für ein Meßsystem gemäß Fig. 1 bzw. einen Meßwandler gemäß Fig. 2 und 3 geeigneten Meßanordnung, umfassend einen Vibrationskörper, einen Schwingungserreger, einen Schwingungssensor und einen Temperatursensor;

Fig. 5      in Explosionsdarstellung eine Variante eines, insb. für ein Meßsystem gemäß Fig. 1 bzw. 2 geeigneten, Meßwandlers mit einem mittels eines Meßrohrs gebildeten Vibrationskörper;

Fig. 6a      mittels eines Meßwandlers gemäß Fig. 2, 3 bzw. 4 ermittelte zeitliche Verläufe einer zu messenden, tatsächlichen Dichte, einer gemessenen Resonanzfrequenz des Vibrationskörpers, einer am Vibrationskörper gemessenen Temperatur sowie einer davon auf konventionelle Weise abgeleiteten gemessenen Dichte; und

Fig. 6b, c      mittels eines Meßwandlers gemäß Fig. 2, 3 bzw. 4 ermittelte zeitliche Verläufe einer zu messenden, tatsächlichen Dichte, einer korrigierten Resonanzfrequenz des Vibrationskörpers bzw. einer korrigierten Temperatur des Vibrationskörpers sowie einer davon abgeleiteten gemessenen Dichte.

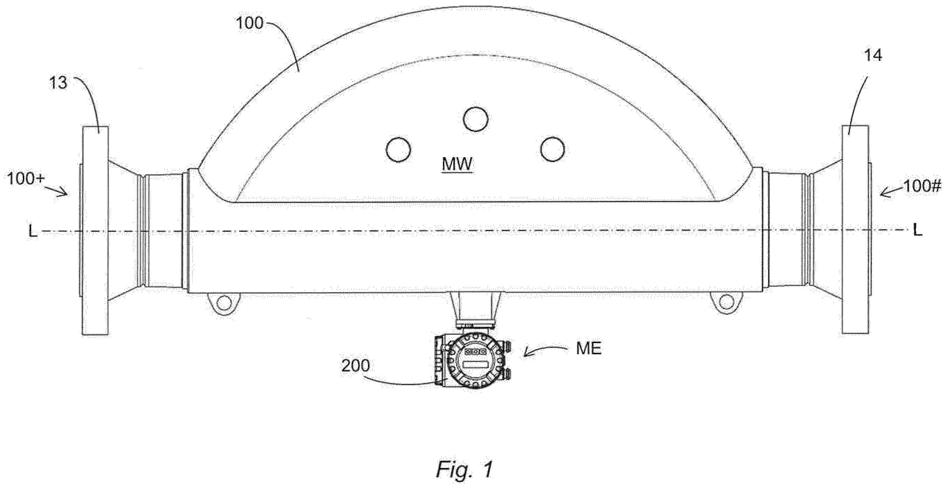

In den Fig. 1, 2 und 3 ist exemplarisch jeweils ein, insb. für die Verwendung in der industriellen Meß- und Automatisierungstechnik geeignetes, Meßsysteme schematisch dargestellt, das dazu dient, eine Dichte $\rho$ eines fließfähigen, mithin in einer Leitung, wie etwa einer Rohrleitung oder einem Gerinne, hindurchführbaren bzw. in einem Behälter, wie etwa einem Tank, vorhaltbaren Fluids FL, beispielsweise also einer Flüssigkeit bzw. einem Gas, zu messen, mithin nämliche Dichte zeitlich aufeinanderfolgend repräsentierende Dichte-Meßwerte $X_\rho$ zu erzeugen. Das Meßsystem ist hier jeweils als In-Line-Meßgerät, nämlich ein in den Verlauf einer - hier nicht dargestellten - Rohrleitung einsetzbares Meßsystem realisiert. Das Meßsystem kann demnach beispielsweise ein zusätzlich zur Dichte $\rho$ auch eine Massendurchflußrate m von strömenden Fluiden messendes Coriolis-Massendurchfluß/Dichte-Meßgerät und/oder ein zusätzlich zur Dichte auch eine Viskosität $\eta$ messendes Dichte-/Viskositäts-Meßgerät für strömende Fluide sein.

Zum Erfassen der Dichte umfaßt das Meßsystem einen - hier in den Verlauf einer (nicht dargestellten) Rohrleitung einfügbaren, im Betrieb vom zu messenden Fluid durchströmten - Meßwandler MW, der einen schwingfähig gehalterten, insb. aus Metall bestehenden, Vibrationskörper 10 aufweist und der - wie aus der Zusammenschau der Fig. 1, 2 und 3 ohne weiteres ersichtlich - an eine in einem Elektronik-Gehäuse 200 untergebrachte, letztlich die Dichte-Meßwerte $X_\rho$ liefernde Elektronik ME elektrisch angeschlossen ist. Dem Vibrationskörper 10 wohnen naturgemäß eine Vielzahl von Eigenfrequenzen inne, von denen jede maßgeblich vom Material bzw. Elastizitätsmodul sowie vom mechanischen Aufbau bzw. der tatsächlichen Einbausituation des Vibrationskörpers bestimmt ist.

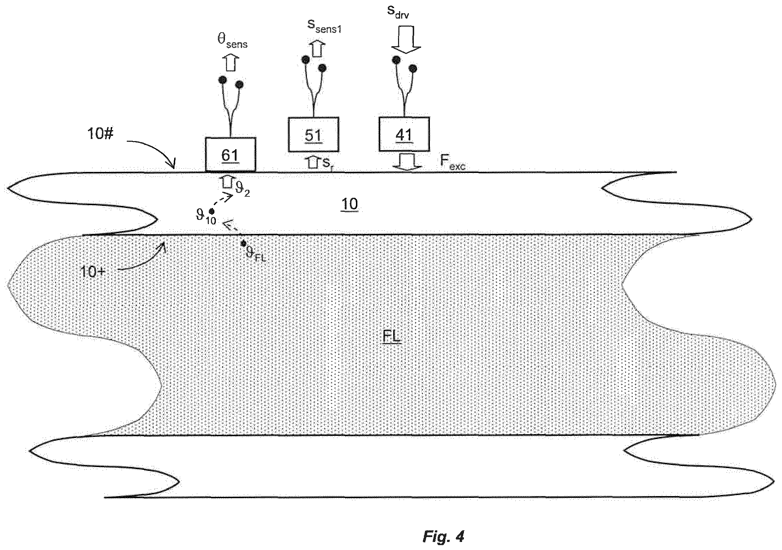

Der Vibrationskörper 10 ist, wie auch in Fig. 4 schematisch dargestellt, dafür eingerichtet ist, im Betrieb zumindest an einer ersten Oberfläche 10+ vom zu messenden Fluid FL kontaktiert und gleichzeitig aktiv zu mechanischen Schwingungen angeregt zu werden, und zwar in der Weise, daß der von Fluid kontaktierte Vibrationskörper 10 zumindest anteilig Resonanzschwingungen $s_r$, nämlich mechanische Schwingungen mit einer Resonanzfrequenz $f_r$ ausführt, die - außer von einer der Eigenfrequenzen - auch von der Dichte $\rho$ des die erste Oberfläche des Vibrationskörpers kontaktierenden Fluids abhängig ist, mithin als Maß für nämliche Dichte dienen kann. Darüberhinaus ist die Resonanzfrequenz $f_r$ bekanntermaßen zudem auch insoweit von einer Fluid-Temperatur $\vartheta_{FL}$, nämlich einer Temperatur des die ersten Oberfläche kontaktierenden Fluids, mitbestimmt, als die Eigenfrequenzen des Vibrationskörpers, nicht zuletzt wegen einer Temperaturabhängigkeit eines Elastizitätsmoduls des Vibrationskörpers wie auch einer temperaturabhängigen Volumenausdehnung, maßgeblich auch von einer Vibrationskörper-Temperatur $\vartheta_{10}$, nämlich einer von der Fluid-Temperatur $\vartheta_{FL}$ abhängigen, insb. mittleren, Temperatur des Vibrationskörpers, beeinflußt ist.

Basierend auf diesen mechanischen Schwingungen des Vibrationskörpers 10 generiert der Meßwandler ferner wenigstens ein von der Dichte abhängiges, nämlich zumindest eine Signalkomponente mit einer der Resonanzfrequenz $f_r$ entsprechenden Signalfrequenz aufweisendes, mithin Vibrationen des Vibrationskörpers 10 repräsentierendes Schwingungsmeßsignal $s_{sens1}$ sowie wenigstens ein der Kompensation des Einflusses der Vibrationskörper-Temperatur $\vartheta_{10}$ auf die Resonanzfrequenz $f_r$, mithin auf das Schwingungsmeßsignal $s_{sens1}$ dienendes Temperaturmeßsignal $\theta_{sens}$, das einen zeitlichen Verlauf der Vibrationskörper-Temperatur $\vartheta_{10}$ entspricht, jedenfalls näherungsweise wiedergibt.

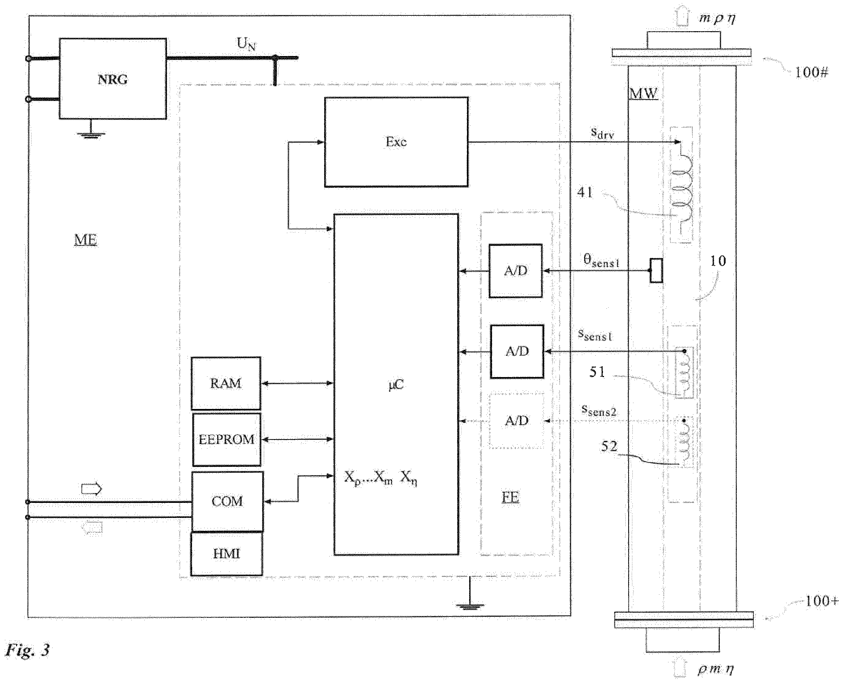

Die Elektronik ME weist, wie in Fig. 3 schematisch dargestellt, daher ferner eine dem Ansteuern des Meßwandlers dienende Treiber-Schaltung Exc sowie eine das wenigstens eine Schwingungsmeßsignal $s_{sens1}$ des Meßwandlers MW verarbeitende, beispielsweise mittels wenigstens eines Mikroprozessors und/oder mittels eines digitalen Signalprozessors (DSP) gebildete, Meß- und Auswerte-Schaltung $\mu$C auf, die unter Verwendung des wenigstens eine Schwingungsmeßsignals $s_{sens1}$ die Dichte-Meßwerte erzeugt, beispielsweise auch inform von Digitalwerten.

Die mittels der Elektronik ME generierten Dichte- Meßwerte können beispielsweise vor Ort angezeigt werden. Zum Visualisieren von Meßgerät intern erzeugten Meßwerten und/oder gegebenenfalls Meßgerät intern generierten Systemstatusmeldungen, wie etwa einer Fehlermeldung oder einem Alarm, vor Ort kann das Meßgerät, wie auch Fig. 3 angedeutet, beispielsweise ein mit der Elektronik kommunizierendes, ggf. auch portables, Anzeige- und Bedienelement HMI aufweisen, wie etwa ein im Elektronikgehäuse hinter einem darin entsprechend vorgesehenen Fenster plaziertes LCD-, OLED- oder TFT-Display sowie eine entsprechende Eingabetastatur und/oder ein Touchscreen. In vorteilhafter Weise kann die, beispielsweise auch fernparametrierbare, Elektronik ferner so ausgelegt sein, daß sie im Betrieb des Meßgeräts mit einem diesem übergeordneten elektronischen Datenverarbeitungssystem, beispielsweise einer speicherprogrammierbaren Steuerung (SPS), einem Personalcomputer und/oder einer Workstation, via Datenübertragungssystem, beispielsweise einem Feldbussystem und/oder drahtlos per Funk, Meß- und/oder andere Betriebsdaten austauschen kann, wie etwa aktuelle Meß- und/oder Systemdiagnosewerte oder der Steuerung des Meßgeräts dienende Einstellwerte. Des weiteren kann die Elektronik ME so ausgelegt sein, daß sie von einer externen Energieversorgung, beispielsweise auch über das vorgenannte Feldbussystem, gespeist werden kann. Für den Fall, daß das Meßgerät für eine Ankopplung an ein Feldbus- oder ein anderes Kommunikationssystem vorgesehen ist, kann die, beispielsweise auch vor Ort und/oder via Kommunikationssystem (re-)programmierbare, Elektronik ME zu dem eine entsprechende Kommunikations-Schnittstelle für eine Datenkommunikation aufweisen, z.B. zum Senden von Meß- und/oder Betriebsdaten, mithin die wenigstens eine Meßgröße repräsentierenden Meßwerte, an die bereits erwähnte speicherprogrammierbare Steuerung oder ein übergeordnetes Prozeßleitsystem und/oder zum Empfangen von Einstelldaten für das Meßgerät. Nicht zuletzt für den Fall, daß das Meßgerät für eine Ankopplung an ein Feldbus- oder ein anderes Kommunikationssystem vorgesehen ist, weist die Elektronik ME daher ferner eine für eine Datenkommunikation gemäß einem der einschlägigen Industriestandards ausgebildete Kommunikations-Schnittstelle COM auf. Darüberhinaus kann die Elektronik ME beispielsweise eine solche interne Energieversorgungsschaltung NRG aufweisen, die im Betrieb von einer im vorgenannten Datenverarbeitungssystem vorgesehen externen Energieversorgung über das vorgenannte Feldbussystem gespeist wird. Hierbei kann die Elektronik ferner z.B. so ausgebildet sein, daß sie mittels einer, beispielsweise als 4-20 mA-Stromschleife konfigurierten, Zweidraht-Verbindung 2L mit dem externer elektronischen Datenverarbeitungssystem elektrisch verbindbar ist und darüber mit elektrischer Energie versorgt werden sowie Meßwerte zum Datenverarbeitungssystem übertragen kann; das Meßgerät kann aber beispielsweise auch als sogenanntes Vierleiter-Meßgerät ausgebildet sein, bei dem die interne Energieversorgungsschaltung NRG der Elektronik ME mittels einem ersten Paars Leitungen mit einer externen Energieversorgung und die interne Kommunikationsschaltung COM der Elektronik ME mittels eines zweiten Paars Leitungen mit einer externen Datenverarbeitungsschaltung oder einem externen Datenübertragungssystem verbunden ist.

Die Elektronik ME ist ferner im hier gezeigten Ausführungsbeispiel in einem entsprechenden, insb. schlag- und/oder auch explosionsfest und/oder hermetisch dicht ausgebildeten und/oder modular aufgebauten, Elektronikgehäuse 200 untergebracht. Das Elektronik-Gehäuse 200 kann beispielsweise vom Meßwandler entfernt angeordnet oder, wie in Fig. 1 gezeigt, unter Bildung eines einzigen Kompaktgeräts direkt am Meßwandler MW, beispielsweise von außen am Aufnehmer-Gehäuse 100 fixiert sein. Bei dem hier gezeigten Ausführungsbeispiel ist daher am Aufnehmer-Gehäuse 100 ferner ein dem Haltern des Elektronik-Gehäuses 200 dienendes halsartiges Übergangsstücks angebracht. Innerhalb des Übergangsstücks kann ferner eine, beispielsweise mittels Glas- und/oder Kunststoffverguß hergestellte, hermetisch dichte und/oder druckfeste Durchführung für elektrische Verbindungsleitungen zwischen elektrischen Komponenten des Meßwandlers MW, hier beispielsweise also dem Schwingungserreger bzw. dem Schwingungssensor, und der Elektronik ME angeordnet sein.

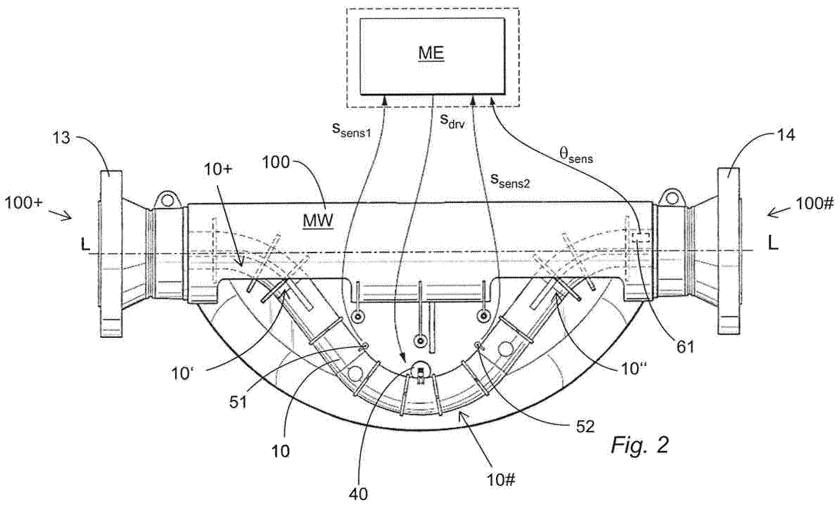

Zum aktiven Anregen von Vibrationen des Vibrationskörpers, insb. auch den für die Messung der Dichte benötigten Resonanzschwingungen, umfaßt der Meßwandler ferner wenigstens einen mit dem Vibrationskörper in Wirkverbindung stehenden elektro-mechanischen - beispielsweise elektrodynamischen, nämlich mittels Tauchankerspule gebildeten - Schwingungserreger 41. Nämlicher Schwingungserreger 41 ist, wie auch in Fig. 2 bzw. 4 schematisch dargestellt bzw. aus deren Zusammenschau ohne weiteres ersichtlich, auf einer von der ersten Oberfläche 10+ des Vibrationskörpers 10 abgewandten - nämlich auch im Betrieb nicht vom zu messenden Fluid kontaktierten - zweiten Oberfläche 10# angeordnet und dient hierbei im besonderen dazu, eine von der Treiber-Schaltung Exc der Elektronik ME mittels wenigstens eines elektrischen Treibersignals $s_{drv}$ eingespeiste elektrische Erregerleistung $P_{exc}$ in, z.B. pulsierende oder harmonische, nämlich im wesentlichen sinusförmige, Erregerkräfte $F_{exc}$ zu konvertieren, die entsprechend auf den Vibrationskörper 10 wirken und somit die gewünschten Resonanzschwingungen aktiv anregen. Beispielsweise kann das wenigstens eine Treibersignal $s_{drv}$ gleichzeitig auch eine Vielzahl von sinusförmigen Signalkomponenten mit voneinander verschiedener Signalfrequenz aufweisen, von denen eine - etwa eine zumindest zeitweise hinsichtlich einer Signalleistung dominierende - Signalkomponente eine der für die Messung der Dichte benötigte Resonanzfrequenz $f_r$ entsprechende Signalfrequenz aufweist. Die - durch Konvertierung von in den Schwingungserreger eingespeister elektrischer Erregerleistung $P_{exc}$ generierten - Erregerkräfte $F_{exc}$ können dabei in dem Fachmann an und für sich bekannter Weise, mittels der in der Elektronik ME vorgesehenen Treiberschaltung Exc entsprechend eingestellt werden, etwa mittels in der Treiberschaltung implementierten, eine Amplitude (Stromstärke) eines Stromes des Treibersignals regelnder Strom- und/oder eine Amplitude (Spannungshöhe) einer Spannung des Treibersignals Spannungs-Reglern hinsichtlich ihres Betrags und, z.B. mittels einer in der Treiberschaltung Exc gleichfalls vorgesehenen Phasen-Regelschleife (PLL - phase locked loop), hinsichtlich ihrer momentanen Frequenz oder im Falle multifrequenter Anregung hinsichtlich ihrer momentanen Frequenzen, vgl. hierzu beispielsweise auch die US-A 48 01 897 oder die US-B 63 11 136. Der Aufbau und die Verwendung vorgenannter Phasenregel-Schleifen zum aktiven Anregen von Vibrationskörpern der in Rede stehenden Art auf einer momentanen Resonanzfrequenz ist z.B. in der US-A 48 01 897 ausführlich beschrieben. Selbstverständlich können auch andere für das Einstellen der Erregerenergie $E_{exc}$ geeignete, dem Fachmann an und für sich bekannte Treiberschaltungen verwendet werden, beispielsweise auch gemäß der dem eingangs erwähnten Stand der Technik, etwa den eingangs erwähnten US-A 47 77 833, US-A 48 01 897, US-A 48 79 911, US-A 50 09 109, US-A 50 24 104, US-A 50 50 439, US-A 58 04 741, US-A 58 69 770, US-A 60 73 495 bzw. US-A 63 11 136. Ferner sei hinsichtlich einer Verwendung solcher Treiberschaltungen auf die mit Meßumformern der Serie "PROMASS 83" bereitgestellte Elektroniken verwiesen, wie sie von der Anmelderin beispielsweise in Verbindung mit auch der Messung der Dichte dienenden Meßwandlern der Serien "PROMASS E", "PROMASS F", "PROMASS H", "PROMASS I", "PROMASS P", "PROMASS S" bzw. "PROMASS X" angeboten werden. Deren Treiberschaltung ist beispielsweise jeweils so ausgeführt, daß Resonanzschwingungen auf eine konstante, mithin auch von der Dichte $\rho$ bzw. auch der Viskosität $\eta$ des jeweils zu messenden Fluids weitgehend unabhängige Amplitude geregelt werden.

Zum Erfassen von Vibrationen des Vibrationskörpers 10, nicht zuletzt auch den mittels des wenigstens eine Schwingungserregers 41 aktiv angeregten Resonanzschwingungen $s_r$, sowie zum Wandeln nämlicher erfaßter Vibrationen in das wenigstens eine Schwingungsmeßsignal $s_{sens1}$ weist der Meßwandler MW ferner wenigstens einen - hier vom wenigstens einen Schwingungserreger 41 beabstandet - auf der zweiten Oberfläche 10# des Vibrationskörper 10 angeordneten, beispielsweise elektrodynamischen, ersten Schwingungssensor 51, der das Vibrationen des Vibrationskörpers repräsentierende Schwingungsmeßsignal $s_{sens1}$, beispielsweise inform einer mit den Schwingungen korrespondierende elektrischen (Wechsel-)Spannung mit einer von einer momentanen Amplitude der Schwingungen des Vibrationskörpers abhängigen Amplitude (Spannungshöhe) und einer der der Resonanzfrequenz $f_r$ entsprechenden Frequenz, letztlich liefert. Darüberhinaus weist der Meßwandler zudem wenigstens einen mit dem Vibrationskörper über dessen zweite Oberfläche 10# thermisch gekoppelten, beispielsweise darauf aufgeklebten, Temperatursensor 61 zum Erzeugen des erwähnten Temperaturmeßsignals $\theta_{sens}$.

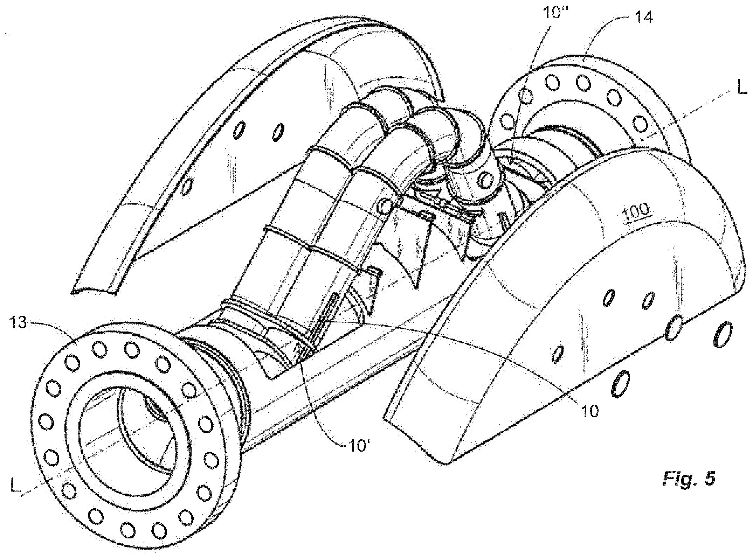

Wie bereits erwähnt und auch in den Fig. 2 bzw. 5 schematisch dargestellt kann der Vibrationskörper 10 beispielsweise mittels eines im Betrieb vom Fluid FL durchströmtes, in einem Meßwandler-Gehäuse 100 untergebrachten, darin schwingfähig gehalterten Meßrohr gebildet sein, das ein von einer, insb. aus Metall bestehende, Rohrwand umgebenen Lumen aufweist und sich zwischen einem einlaßseitigen ersten Meßrohrende 10' und einem auslaßseitigen zweiten Meßrohrende 10" mit einer Nutz-Schwinglänge erstreckt. Das Meßsystem kann demnach beispielsweise auch als ein zusätzlich zur Dichte auch einen Massendurchfluß des strömenden Fluids FL messendes Coriolis-Massendurchfluß-/Dichte-Meßgerät und/oder als ein zusätzlich zur Dichte auch eine Viskosität des Fluids messendes Viskositäts-/Dichte-Meßgerät ausgebildet sein. Das Meßrohr 11, mithin der damit gebildete Vibrationskörper, ist hierbei dafür eingerichtet, das von messendem Fluid durchströmt zu werden, mithin Teilvolumen des messenden Fluids zu führen, nachdem es in das Lumen einströmengelassen worden ist, wobei die das Fluid berührenden erste Oberfläche des Vibrationskörpers von einer dem Lumen zugewandten vom Fluid kontaktierten Innenfläche der Rohrwand und die das Fluid nicht kontaktierende zweite Oberfläche des Vibrationskörpers von einer Außenfläche der Rohrwand gebildet sind. Die dem Messen der Dichte dienenden Resonanzschwingungen können hierbei beispielsweise derart sein, daß das als Vibrationskörper dienende Meßrohr über seine gesamte Nutz-Schwinglänge vibrieren gelassen, beispielsweise in einem Biegeschwingungsmode, in dem das wenigstens eine Meßrohr um eine die beiden Meßrohrenden 10', 10" imaginär miteinander verbindende, zu einer gedachten Längsachse L des Meßwandlers im wesentlichen parallele gedachte Schwingungsachse nach Art eines einseitig eingespannten Auslegers ausgelenkt, und dabei, um eine statische Ruhelage oszillierend, wiederholt elastisch verformt wird. Die Nutz-Schwinglänge entspricht hierbei quasi einer Länge einer innerhalb von Lumen verlaufende gedachte Mittel- oder auch Schwerelinie (gedachte Verbindungslinie durch die Schwerpunkte aller Querschnittsflächen des Meßrohrs), im Falle eines gekrümmten Meßrohrs also einer gestreckten Länge des Meßrohrs. Der Meßwandler ähnelt in seinem mechanischen Aufbau wie auch seinem Wirkprinzip dem in den US-B 73 60 451 oder der US-B 66 66 098 vorgeschlagenen bzw. auch den seitens der Anmelderin unter der Typbezeichnung "PROMASS H", "PROMASS P" oder "PROMASS S" für die Messung von sowohl Dichte als auch Massendurchfluß strömender Fluide käuflich angebotenen Meßwandlern. Zur Realisierung der Erfindung können aber auch andere Meßwandler mit Vibrationskörper dienen, im Falle von Meßwandlern mit einem Meßrohr als Vibrationskörper also auch solche mit geradem und/oder mehr als einem Meßrohr, beispielsweise also vier oder, wie in Fig. 5 gezeigt, zwei Meßrohren oder auch solche vergleichbar in den eingangs erwähnten der US-A 2010/0236338, der US-A 2010/0242623, der US-A 2010/0242624, der US-A 56 02 345, der US-A 57 31 527, der US-A 57 96 011, der US-A 60 06 609, der US-B 65 13 393, der US-B 68 40 109, der US-B 69 20 798 oder der US-B 70 17 424, gezeigten oder beispielsweise auch den seitens der Anmelderin unter der Typbezeichnung "PROMASS I", "PROMASS M", "PROMASS E", "PROMASS F" bzw. "PROMASS X" für die Messung von Massendurchfluß als auch Dichte strömender Fluide käuflich angebotenen Meßwandlern. Demnach kann der Meßwandler beispielsweise auch ein einziges gerades Meßrohr oder wenigstens zwei jeweils als ein Vibrationskörper dienende, beispielsweise mittels eines einlaßseitigen Strömungsteilers und eines auslaßseitigen Strömungsteilers, ggf. zusätzlich auch noch mittels ein- und auslaßseitiger Koppelelemente, miteinander mechanisch gekoppelte und/oder einander baugleiche und/oder gekrümmte und/oder zueinander parallele, Meßrohre zum Führen von zu messendem Fluid aufweisen, die im Betrieb zum Erzeugen des Schwingungsmeßsignale zumindest zeitweise vibrieren, etwa frequenzgleich auf einer gemeinsamen Schwingfrequenz, jedoch zueinander gegengleich. Nicht zuletzt für den Fall, daß der Vibrationskörper mittels eines geraden Meßrohrs gebildet ist, können die Resonanzschwingungen $s_r$ beispielsweise auch als Torsionsschwingungen oder auch als Radialschwingungen um eine mit der erwähnten Längsachse des Meßwandlers parallele, ggf. auch damit koinzidente gedachte Schwingungsachse ausgebildet sein.

Für den für einen solchen Meßwandler mit als Vibrationskörper dienendem Meßrohr typischen Fall, daß nämlicher Meßwandler MW lösbar mit der - beispielsweise als metallische Rohrleitung ausgebildeten - Prozeßleitung zu montieren ist, sind, wie in Fig. 1, 2 bzw. 5 angedeutet bzw. aus deren Zusammenschau ohne weiteres ersichtlich, einlaßseitig (100+) des Meßwandlers einer erster Anschlußflansch 13 für den Anschluß an ein Fluid dem Meßwandler zuführendes Leitungssegment der Prozeßleitung und auslaßseitig (100#) ein zweiter Anschlußflansch 14 für ein Fluid vom Meßwandler abführendes Leitungssegment der Prozeßleitung vorgesehen. Die Anschlußflansche 13, 14 können dabei, wie bei Meßwandlern der beschriebenen Art durchaus üblich auch endseitig in das Meßwandlergehäuse 100 integriert sein, mithin ein einlaßseitiges Meßwandlerende 100+ bzw. ein auslaßseitiges Meßwandlerende 100# bilden. Im Falle seiner Verwendung in einem Coriolis-Massedurchfluß-Meßgerät weist der Meßwandler gemäß einer weiteren Ausgestaltung der Erfindung ferner einen vom ersten Schwingungssensor 51 in Strömungsrichtung beabstandeten zweiten Schwingungssensor 52 auf, wobei der erste Schwingungssensor beispielsweise einlaßseitig am als Vibrationskörper dienenden Meßrohr plaziert ist, während der zweite Schwingungssensor stromabwärts des ersten Schwingungssensor auslaßseitig am Meßrohr angeordnet ist.

Anstelle eines Meßwandlers mit einem als Vibrationskörper dienenden Meßrohr bzw. eines damit gebildeten, beispielsweise also als Coriolis-Massendurchfluß-/Dichte-Meßgerät realisierbaren, Meßsystems kann die Dichte aber auch mittels eines anderen, als Vibrationskörper dienenden, mithin in Kontakt mit dem zu messenden Fluid verbringbarem elektro-mechanischem Schwingungssystem gemessen werden. Zur Realisierung der Erfindung können beispielsweise auch solche Dichte messenden Meßsysteme dienen, bei denen der Vibrationskörper dafür eingerichtet ist, zwecks des Erfassens der Dichte zumindest teilweise in das zu messende Fluid eingetaucht bzw. von Fluid angeströmt zu werden. Demnach kann es sich bei dem Meßsystem beispielsweise also auch um einen wenigstens einen, beispielsweise paddelförmig und/oder innen hohlen, Schwingstab aufweisenden sogenannten Füllstandsgrenzschalter mit integrierter Dichtemessung handeln, beispielsweise also gemäß der eingangs erwähnten US-B 68 45 663, mithin kann der Vibrationskörper eine schwingfähig gehalterte Membran aufweisen, derart daß die das Fluid berührenden erste Oberfläche des Vibrationskörpers mittels einer ersten Membranfläche und die das Fluid nicht kontaktierende zweite Oberfläche von einer der ersten zweiten Membranfläche gegenüberliegenden zweiten Membranfläche gebildet sind bzw. kann der Vibrationskörper weiters ein an der ersten Membranfläche fixiertes, mithin in das Fluid eintauchendes Paddel aufweisen. Ferner kann Meßsystem beispielsweise ein Coriolis-Massendurchfluß-/Dichte-Meßgerät mit einem durch eine Wand einer Rohrleitung hindurch steckbaren, als Hohlkörper ausgebildeten Vibrationskörper sein - etwa gemäß der eingangs erwähnten EP-A 564 682 als inform eines mindestens einseitig verschlossenen, innen hohlen Zylinder.

Das wenigstens eine vom Meßwandler generierte Schwingungsmeßsignal $s_{sens1}$ wie auch das Temperatur-meßsignal $\theta_{sens}$ sind, wie in Fig. 2 und 3 schematisch dargestellt bzw. aus deren Zusammenschau ohne weiters ersichtlich, der Elektronik ME zugeführt, um daselbst mittels einer der darin vorgesehenen eigentlichen Meß- und Ausschwerteschaltung $\mu$C vorgeschalteten Eingangsschaltung FE der Elektronik zunächst vorverarbeitet, insb. vorverstärkt, gefiltert und digitalisiert, zu werden und hernach ausgewertet, nämlich zumindest in den wenigstens einen Dichte-Meßwert $X_\rho$ bzw. weitere zeitlich aufeinanderfolgende Dichte-Meßwerte gewandelt zu werden; dies ggf. auch unter Berücksichtung mittels des wenigstens einen Treibersignals in die Erregeranordnung eingespeister, mithin auch darin umgesetzter elektrischer Erregerleistung. Nicht zuletzt zwecks Generierung des Dichte-Meßwert $X_\rho$ ermittelt die Meß-und Auswerteschaltung $\mu$C basierend auf dem Schwingungsmeßsignal $s_{sens1}$ wiederkehrend einen als Maß für eine dem aktuellen Dichte-Meßwert $X_\rho$ zugrundezulegende Resonanzfrequenz dienenden, mithin nämliche Resonanzfrequenz repräsentierenden Frequenz-Meßwert $X_f$ sowie anhand des Temperaturmeßsignal $\theta_{sens}$ gelegentlich auch einen Temperatur-Meßwert $X_\vartheta$, der als ein Maß für die eine Vibrationskörper-Temperatur dient, die die dem aktuellen Dichte-Meßwert $X_\rho$ zugrundezulegende Eigenfrequenz bestimmt, mithin nämliche Vibrationskörper-Temperatur repräsentiert. Unter Verwendung des Frequenz-Meßwerts $X_f$ und des Temperatur-Meßwerts $X_\vartheta$ kann der Dichte-Meßwert $X_\rho$ auf die dem Fachmann an und für sich geläufige Weise ermittelt werden, etwa in Anwendung der bekannten Näherungsformel

$$X_\rho \sim K \cdot \frac{1 + X_\vartheta}{X_f{}^2} + \dots,$$ mithin durch Dividieren des Temperatur-Meßwerts $X_\vartheta$ durch einen quadrierten Frequenz-Meßwert $X_f$.

Im Falle einer Verwendung in einem Coriolis-Massedurchfluß-Meßgerät dient die Elektronik ME ferner auch dazu, unter Verwendung der vom Meßwandler generierten Schwingungsmeßsignalen, nämlich anhand einer zwischen den Schwingungsmeßsignalen $s_{sens1}$, $s_{sesn2}$ des ersten und zweiten Schwingungssensors 51, 52 detektierten, durch Corioliskräfte im strömenden Fluid verursachten Phasendifferenz wiederkehrend einen Massendurchfluß-Meßwert $X_m$ zu ermitteln, der eine zu messenden Massendurchflußrate, m, des durch den Meßwandler geführten Fluids repräsentiert. Alternativ oder in Ergänzung dazu kann die Meß- und Auswerteschaltung, wie bei mittels eines Vibrationskörper gebildeten Meßsystemen zur Dichte Messung durchaus üblich, ggf. auch dazu verwendet werden, basierend auf der eingespeisten elektrischer Erregerleistung $P_{exc}$ sowie dem wenigstens einen Schwingungsmeßsignal $s_{sens1}$ einen eine Viskosität $\eta$ des Fluids repräsentierenden Viskositäts-Meßwert $X_\eta$ zu ermitteln, vgl. hierzu auch die eingangs erwähnten US-B 72 84 449, US-B 70 17 424, US-B 69 10 366, US-B 68 40 109, US-A 55 76 500 oder US-B 66 51 513.

Die Programm-Codes für solche der Generierung von Meßwerten, nicht zuletzt auch den Dichte-Meßwerten, dienende Auswerteprogramme bzw. für der Ansteuerung des Meßwandlers dienende Regelungsprogramme können z.B. in einem nicht-flüchtigen Datenspeicher EEPROM der Elektronik persistent gespeichert sein und beim Aufstarten der Elektronik in einen, z.B. im Prozessor integrierten, flüchtigen Datenspeicher RAM geladen werden. Gleichermaßen können mittels der Elektronik ME im Betrieb generierte Meßwerte in einen solchen, ggf. auch denselben, flüchtigen bzw. in einen solchen nicht-flüchtigen Datenspeicher geladen und für eine spätere Weiterverarbeitung entsprechend vorgehalten werden.

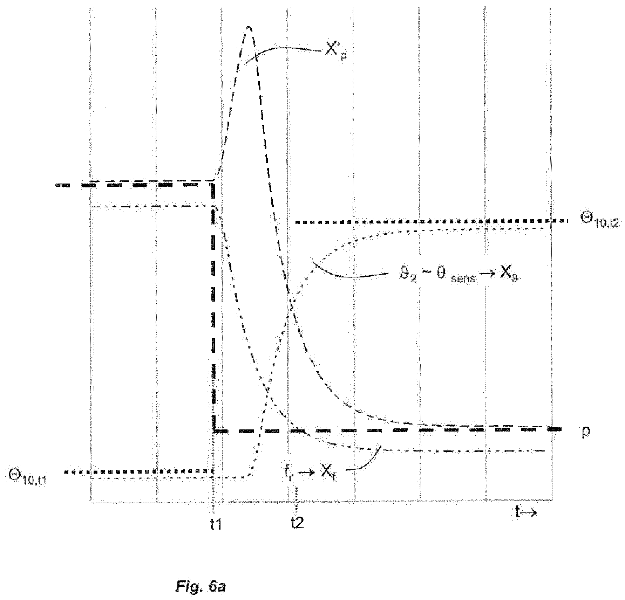

Wie bereits erwähnt, können auf Resonanzschwingungen eines Vibrationskörpers basierende Verfahren zur Ermittlung der Dichte von Fluiden gelegentlich erhebliche Meßungenauigkeiten aufweisen, dies im besonderen auch während eines auf einen Wechsel des Fluids FL unmittelbar folgenden, mithin instationären Übergangszeitraum während dem das Meßsystem von einem vor dem Austauschen des Fluids eingenommenen stationären Zustand in einen durch das nunmehr neue Fluid mitbestimmten geänderten Zustand wechselt. Weiterführende Untersuchungen an Meßsystemen der in Rede stehenden Art haben ergeben, daß solche Meßungenauigkeiten teilweise dadurch erklärt werden können, daß ein solcher Fluidaustausch zum einen regelmäßig auch mit einer signifikanten Änderung der für die Messung wirksamen Fluid-Temperatur $\vartheta_{FL}$ einhergehen können, zum anderen aber gerade diese Änderung der Fluid-Temperatur bzw. die Auswirkung davon auf das gesamte Meßsystem in der eigentlich nur für stationäre Verhältnisse geltenden Abhängigkeiten $f_r{}^2 = f(1/\rho)$ bzw. $f_r{}^2 = f(\vartheta_{10})$, $\vartheta_{sens} \sim \vartheta_{10}$ bislang als vernachlässigbar angesehen bzw. völlig übersehen, jedenfalls aber nicht ausreichend berücksichtigt worden ist. Der Vibrationskörper 10 weist nämlich sowohl eine bestimmte Wärmekapazität, $C_{10}$, als auch eine - üblicherweise mehr als 5 W K$^{-1}$ m$^{-1}$ betragende - spezifische Wärmeleitfähigkeit $\lambda_{10}$ und dementsprechend einen davon abhängigen, für einen Wärmedurchgang von der naturgemäß die Fluid-Temperatur aufweisenden ersten Oberfläche 10+ des Vibrationskörpers bis zu dessen zweiten Oberfläche 10# wirksamen Wärmeleitwert, $\Lambda_{10}$, mithin eine gewisse thermische Trägheit auf. Somit ändert sich also die Vibrationskörper-Temperatur $\vartheta_{10}$ nicht nur unmittelbar nach einer, beispielsweise also durch einen Fluidwechsel initiierten, Änderung der Fluid-Temperatur, sondern infolge seiner von der Wärmekapazität, $C_{10}$ und dem Wärmeleitwert, $\Lambda_{10}$, abhängigen thermischen Trägheit auch noch über einen gewissen, im Vergleich zu einem für die Ermittlung eines Dichte-Meßwerts $X_\rho$ erforderlichen Meßzyklus viel längeren Zeitraum nachlaufend. Damit einhergehend weicht aber auch die vom Temperatursensor 61 eigentlich erfaßte Temperatur $\vartheta_2 \rightarrow \theta_{sens}$ an der zweiten Oberfläche 10# des Vibrationskörpers 10 während des Übergangszeitraum stets von der für die Schwingungseigenschaften eigentlich effektiven Vibrationskörper-Temperatur $\vartheta_{10}$ ab, und zwar in sich zeitlich ändernder Höhe. Allein schon deswegen kann also das Temperaturmeßsignal $\theta_{sens}$ einer - beispielsweise also aus einer Änderung der Temperatur des den Vibrationskörper an dessen erster Oberfläche 10+ kontaktierenden Fluids und/einem Fluidaustausch resultierenden - Änderung der Vibrationskörper-Temperatur $\vartheta_{10}$ von einem anfänglichen ersten Temperaturwert $\Theta_{10,t1}$ auf einen zweiten Temperaturwert $\Theta_{10,t2}$ lediglich zeitverzögert folgen, mithin nämlichem zweiten Temperaturwert lediglich zeitverzögert entsprechen, jedoch ohne daß dies bzw. ein daraus resultierender dynamischer Meßfehler bei der Ermittlung der Dichte bislang entsprechend berücksichtigt worden ist. Beispielsweise kann also die Temperatur $\vartheta_2 \to \theta_{sens}$ an der zweiten Oberfläche 10# des Vibrationskörpers 10, mithin kann das Temperatursignal $\theta_{sens}$ während eines instationären Übergangszeitraums der vorgenannten Art einen zeitlichen Verlauf nehmen, der näherungsweise dem in der Fig. 6a gezeigten entspricht.

Als eine weitere Ursache für Meßungenauigkeiten der vorgenannten Art ist zu dem auch einem dem Temperatursensor selbst innewohnende thermische Trägheit erkannt worden, die die den herkömmlichen Meßsystemen der in Rede stehenden Art immanenten dynamischen Meßfehler noch weiter erhöht.

Im Ergebnis solcher sich während des hinsichtlich der Vibrationskörper-Temperatur bzw. deren zeitlichen Verlauf instationären Übergangszeitraums ständig ändernden - bei der Ermittlung bislang jedoch nicht korrekt bzw. überhaupt nicht berücksichtigten - Vibrationskörper-Temperatur $\vartheta_{10}$ ändern sich in entsprechender Weise zwangläufig aber auch die Schwingungseigenschaften des Vibrationskörpers 10, so daß also eine mit dem Fluidwechsel einhergehende Änderung der Resonanzfrequenz $f_r$ im Ergebnis nicht - wie bisher - allein auf die entsprechende Änderung der Dichte, sondern zudem auch auf eine thermisch bedingte Änderung der dem Vibrationskörper 10 innewohnenden, die Resonanzfrequenz $f_r$ mitbestimmenden Eigenfrequenz zurückzuführen ist. Ferner bedeutet dies, daß während des hinsichtlich der Vibrationskörper-Temperatur $\vartheta_{10}$ instationären Übergangszeitraums die anhand des wenigstens einen Schwingungssignal $s_{sens1}$ inform von entsprechenden Frequenz-Meßwerten $X_f$ ermittelte Resonanzfrequenz - von der bzw. von denen in Fig. 6a exemplarisch ein entsprechender, nämlichen Übergangszeitraums mit enthaltender zeitlicher Verlauf gezeigt ist - der tatsächlichen Resonanzfrequenz $f_r$ zwar sehr genau entsprechen kann, dennoch aber davon abgeleitete Dichte-Meßwerte $X'_\rho$ - von denen ebenfalls ein entsprechender zeitlicher Verlauf in Fig. 6a gezeigt ist - zwischenzeitlich in erheblichem Maße von der momentanen Dichte $\rho$ abweichen können, weil die zu deren Ermittlung jeweils herangezogene Temperatur $\vartheta_2 \to \vartheta_{sens}$ an der zweiten Oberfläche 10# des Vibrationskörpers 10, mithin die davon jeweils abgeleiteten Temperatur-Meßwerte $X_\vartheta$ die eigentlich erforderliche Vibrationskörper-Temperatur $\vartheta_{10}$ bzw. einen zeitlichen Verlauf davon, wie auch aus der Fig. 6a ohne weiters ersichtlich, lediglich näherungsweise wiedergeben. Im Ergebnis dessen kann also die für den vorbeschriebenen zeitlichen Verlauf von gemessener Resonanzfrequenz ($f_R \to X_f$) und gemessener Temperatur ($\vartheta_2 \to X_\vartheta$) auf herkömmliche Weise, nämlich ohne entsprechende Berücksichtigung des dynamischen Übertragungsverhaltens der Temperatur-Meßkette ermittelte Dichte $X'_\rho$ näherungsweise dem in der Fig. 6a gezeigten Verlauf entsprechen, wobei deutlich erkennbar zwischenzeitlich nicht nur eine in erheblichem Maße fehlerbehaftete Dichte ermittelt wird, sondern zunächst, nämlich unmittelbar nach vollzogenem Fluidaustausch, leider sogar eine zunehmende Dichte suggeriert wird, obwohl letztere gegenüber dem ursprünglichen tatsächlich aber kleiner geworden ist - etwa infolge der Verwendung eines lediglich wärmer gewordenen, qualitativ aber gleich belassenen Fluids.

Dem Rechnung tragend ist das erfindungsgemäße Meßsystem daher ferner dafür eingerichtet, mithin ist das damit realisierte Verfahren zur Messung der Dichte ferner so ausgestaltet, daß beim Erzeugen des Dichte-Meßwerts $X_\rho$, basierend auf dem wenigstens einen Schwingungsmeßsignal $s_{sens1}$ sowie dem wenigstens einen Temperaturmeßsignal $\theta_{sens}$, während einer - beispielsweise also aus einer auf einen Ersatz eines zuvor dem Vibrationskörper zugeführten Fluids gegen das aktuelle Fluid FL folgenden Änderung der Fluid-Temperatur $\vartheta_{FL}$ bzw. der Temperatur des Vibrationskörpers 10 an dessen erster Oberfläche 10+ resultierenden - Änderung der Vibrationskörper-Temperatur $\vartheta_{10}$ eine während des Erzeugens des nämlichen Dichte-Meßwerts zwischen dem zeitlichen Verlauf der Vibrationskörper-Temperatur und dem Temperaturmeßsignal auftretende Diskrepanz $Err'_\vartheta = \theta_{sens} - \vartheta_{10}$ berücksichtigt ist. Im einfachsten Fall kann das Berücksichtigen der Diskrepanz darin bestehen, daß deren Auftreten detektiert und signalisiert wird, beispielsweise inform einer vor Ort angezeigten Meldung, und/oder durch Abspeichern im Datenspeicher, ggf. mit Zeitstempel, dokumentiert wird.

Gemäß einer weiteren Ausgestaltung der Erfindung ist ferner vorgesehen, daß die - üblicherweise nach und nach geringer werdende, mithin zeitabhängige - Diskrepanz schon bei Ermittlung des Frequenz-Meßwerts $X_f$ und/oder des Temperatur-Meßwerts $X_\vartheta$ entsprechend einfließen gelassen wird - beispielsweise rechnerisch mittels der Meß- und Auswerte-Schaltung µC und/oder durch geeignete Konditionierung des Temperaturmeßsignal $\theta_{sens}$ mittels eines hinsichtlich seines Übertragungsverhaltens entsprechend getrimmten Signalfilters -, und zwar derart, daß die thermische Trägheit des Vibrationskörpers und/oder des Temperatursensors, mithin nämliche Diskrepanz bei der Ermittlung Dichte-Meßwerts zumindest teilweise kompensiert sind.

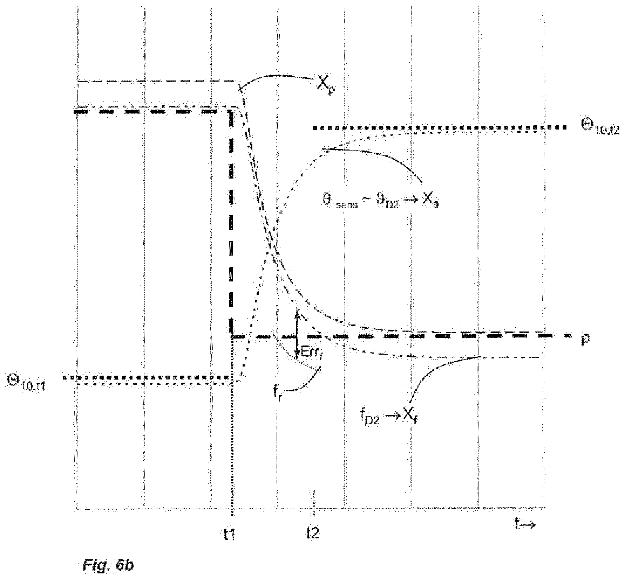

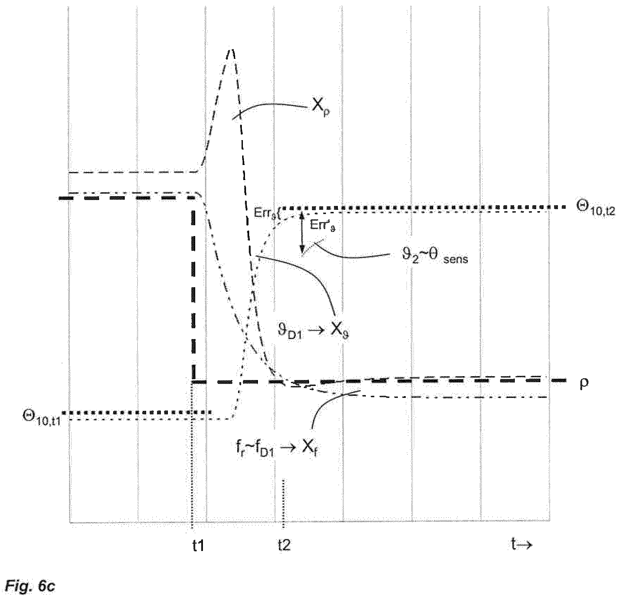

Grundsätzlich existieren im wesentlichen nunmehr zumindest drei Ansätze, die vorgenannte - aus der thermischen Trägheit der der Ermittlung der Vibrationskörper-Temperatur dienenden Meßkette, umfassend den Vibrationskörper selbst sowie den diesen kontaktierenden Temperatursensor, resultierende - Diskrepanz zwischen dem zeitlichen Verlauf der Vibrationskörper-Temperatur und dem Temperaturmeßsignal durch eine geeignete signaltechnische Verarbeitung des wenigstens einen Schwingungsmeßsignals sowie des wenigstens einen Temperaturmeßsignals rechnerisch zu kompensieren, nämlich durch ein entsprechendes Verzögern - nämlich langsamer als die Resonanzfrequenz selbst gegen einen stationären Endwert Strebenlassen - eines anhand des Schwingungsmeßsignals signalverarbeitungstechnisch ermittelbaren zeitlichen Verlaufs der Resonanzfrequenz des Vibrationskörpers (Fig. 6b), oder durch ein entsprechendes Beschleunigen - nämlich schneller als die an der zweiten Oberfläche 10# des Vibrationskörpers 10 erfaßte Temperatur gegen einen stationären Endwert Strebenlassen - eines anhand des Temperaturmeßsignals signalverarbeitungstechnisch ermittelbaren zeitlichen Verlaufs der Temperatur an der zweiten Oberfläche des Vibrationskörpers 10 (Fig. 6c) oder durch eine entsprechende Kombination aus nämlichem signalverarbeitungstechnischen Verzögern des zeitlichen Verlaufs der Resonanzfrequenz und nämlichen signalverarbeitungstechnischen Beschleunigen des zeitlichen Verlaufs der Temperatur an der zweiten Oberfläche des Vibrationskörpers.

Gemäß einer weiteren Ausgestaltung der Erfindung wird daher mittels der Meß- und Auswerte-Schaltung $\mu$C zunächst eine Frequenz-Abtastfolge $f_{D1}$ erzeugt, nämlich eine Sequenz von basierend auf dem wenigstens einen Schwingungsmeßsignal $s_{sens1}$ zu verschiedenen, beispielsweise zeitlich äquidistanten, Zeitpunkten ermittelten digitalen Frequenzwerten $X_{f1}$, die einen zeitlichen Verlauf der Resonanzfrequenz $f_r$ des Vibrationskörpers approximiert, nämlich zumindest näherungsweise entspricht ($f_{D1} \sim f_r$). Ferner ist gemäß einer diese Ausgestaltung weiterbildenden Variante der Erfindung vorgesehen, die Frequenz-Abtastfolge $f_{D1}$ zum Erzeugen einer verzögerten Frequenz-Abtastfolge $f_{D2}$ zu verwenden, nämlich einer Sequenz von basierend auf der Frequenz-Abtastfolge $f_{D1}$ zu verschiedenen, beispielsweise zeitlich äquidistanten, Zeitpunkten $t_n = n \cdot T_s$, mithin mit einer, insb. konstanten, Taktrate, $f_s = 1 / (t_{n+1} - t_n) = 1 / T_s$, ermittelten digitalen Frequenzwerten $X_{f2}$, die - wie in Fig. 6b schematisch dargestellt - den zeitlichen Verlauf der Resonanzfrequenz $f_r$ des Vibrationskörpers in der Weise approximiert, daß sich nämliche verzögerte Frequenz-Abtastfolge $f_{D2}$ einem auf eine - beispielsweise rampenförmige oder auch, wie in Fig. 6b gezeigt, sprungförmige - Änderung der Resonanzfrequenz folgenden tatsächlichen zeitlichen Verlauf $f_r(t)$ der Resonanzfrequenz $f_r$ langsamer annährt, als die Frequenz-Abtastfolge $f_D$ selbst (entspricht dem zeitlichen Verlauf $f_r \rightarrow X_f$ in Fig. 6a). Ein jeweils aktuell, nämlich zum Zeitpunkt $t_n$ ermittelter Frequenzwert $X_{f2}[n]$ der verzögerte Frequenz-Abtastfolge $f_{D2}$ dient hier jeweils dann auch als aktueller Frequenz-Meßwert $X_{f2}[n] \rightarrow X_f[n]$. Im Ergebnis dessen, weicht also ein während eines zumindest hinsichtlich der Vibrationskörper-Temperatur instationären Übergangszeitraums - beispielsweise infolge eines Fluidtauschs oder einer Änderung der Fluidtemperatur - aktuell ermittelter digitaler Frequenz-Meßwert $X_f[n]$ stets von der tatsächlich bzw. momentan erfaßten Resonanzfrequenz $f_r$ im Zeitpunkt $t_n$ um einen bestimmten, gegen Ende des Übergangszeitraums immer geringer werdenden Differenzbetrag $Err_f = X_f[n] - f_r$ ab, um schlußendlich nach dem Wiedererreichen eines durch die momentane Fluidtemperatur und die momentane Dichte bestimmten neuen stationären Zustand des Meßsystems wieder der tatsächliche Resonanzfrequenz $f_r$ genau zu entsprechen.

Zur Generierung der verzögerten Frequenz-Abtastfolge $f_{D2}$, mithin zur Generierung der daraus abgeleiteten Frequenz-Meßwerte $X_f[n]$ kann demnach ein, beispielsweise als ein IIR-Filter (*infinite response filter*) oder auch eine FIR-Filter (*finite response filter*) ausgebildetes, digitales Filter dienen, das eine einem Tiefpaß erster oder auch höherer Ordnung entsprechende Übertragungsfunktion $G^*(z) = Z(g[n])$ aufweist. Im Falle der Verwendung eines FIR-Filter (finite response filter) als digitales Filter ist die Übertragungsfunktion bekanntlich durch die simple Rechenvorschrift

$$G^*(z) = Z(g[n]) = \sum_{k=0}^{N} w_k \cdot z^{-k} = \sum_{k=0}^{N} w_k \cdot e^{-j\omega T_s} = \sum_{k=0}^{N} w_k \cdot e^{-j\omega(t_{n+1}-t_n)}$$ definiert, wobei im Falle eines als ein einem reinen Tiefpaß entsprechenden Interpolator ausgebildeten digitalen Filters sämtliche der Filterkoeffizienten $w_k$ positives Vorzeichen aufweisen. Demnach werden als im Fall eines FIR-Filters zwecks Generierung der verzögerten Frequenz-Abtastfolge $f_{D2}$, mithin zwecks Ermittlung eines jeweils aktuellen Frequenz-Meßwerts $X_f[n]$, zeitlich aufeinanderfolgende Frequenzwerte der Frequenz-Abtastfolge $f_{D1}$ gemäß der die vorgenannte Übertragungsfunktion, mithin das digitale Filter im Abtastbereich repräsentierenden Rechenvorschrift $X_f[n] \leftarrow X_{f2}[n] = \sum_{k=0}^{N} w_k \cdot X_{f1}[N-k]$ gewichtet aufsummiert.

Die die Übertragungsfunktion definierenden Parameter, nämlich die Filterkoeffizienten $w_k$ sowie eine deren Anzahl entsprechende Filterlänge N, können hierbei - unabhängig von der Art des Filters (IIR- bzw. FIR-Filter) - beispielsweise so gewählt sein, daß die damit eingestellte Übertragungsfunktion des digitalen Filters das dynamische Übertragungsverhalten der mittels des Vibrationskörper und des Temperatursensors gebildeten Meßkette, nämlich deren thermische Trägheit, annährt, so daß also ein zeitlicher Verlauf der verzögerten Frequenz-Abtastfolge $f_{D2}$ während eines instationären Übergangsbereich der vorbeschriebenen Art dem zeitlichen Verlauf der Temperatur an der zweiten Oberfläche des Vibrationskörpers 10 bzw. dem zeitlichen Verlauf des diese repräsentierenden Temperatursignals entspricht.

Gemäß einer weiteren Variante der Erfindung wird, nicht zuletzt zwecks Ermittlung des Temperatur-Meßwerts $X_\vartheta$, mittels der Meß- und Auswerte-Schaltung $\mu$C eine Vibrationskörper-Temperatur-Schätzfolge $\vartheta_{D1}$, nämlich einer Sequenz von basierend auf dem wenigstens einen Temperaturmeßsignal zu verschiedenen, beispielsweise zeitlich

äquidistanten, Zeitpunkten $t_m = m \cdot T_{s2}$, mithin mit einer, insb. konstanten, Taktrate $f_{s2} = 1 / (t_{m+1} - t_m) = 1 / T_{s2}$ ermittelten digitalen Temperaturwerten $X_{\vartheta 1}$, die einen zeitlichen Verlauf der Vibrationskörper-Temperatur approximiert, derart, daß sich nämliche Vibrationskörper-Temperatur-Schätzfolge - wie in Fig. 6c schematisiert dargestellt bzw. auch aus einer Zusammenschau der Fig. 6a und 6c ersichtlich - einem auf eine - etwa sprungförmige und/oder aus einer Änderung der Fluid-Temperatur resultierende - Änderung der Temperatur an der zweiten Oberfläche des Vibrationskörpers folgenden zeitlichen Verlauf der Vibrationskörper-Temperatur schneller annähert, als das Temperaturmeßsignal $\theta_{sens}$. Ein jeweils aktuell, nämlich zum Zeitpunkt $t_m$ ermittelter Temperaturwert $X_{\vartheta 1}[m]$ der Vibrationskörper-Temperatur-Schätzfolge $\vartheta_{D1}$ dient hier jeweils dann auch als aktueller Temperatur-Meßwert $X_{\vartheta 1}[m] \rightarrow X_{\vartheta}[m]$. Im Ergebnis dessen weicht also ein während eines instationären Übergangszeitraums der in Rede stehenden Art aktuell ermittelter digitaler Temperatur-Meßwert $X_{\vartheta 1}[m]$ von der eigentlichen Vibrationskörper-Temperatur $\vartheta_{10}$ im Zeitpunkt $t_m$ um einen Differenzbetrag $Err_{\vartheta}$ = $X_{\vartheta 1}[m]$ - $\vartheta_{10}$ ab, der zumindest kleiner als eine der zu berücksichtigenden momentanen Diskrepanz $Err'_{\vartheta}$ entsprechende momentane Abweichung zwischen dem vom Temperatursensor momentan gelieferten Temperaturmeßsignal $\theta_{sens}$ und der momentanen Vibrationskörper-Temperatur $\vartheta_{10}$, idealerweise aber so klein wie möglich ist.

Die Vibrationskörper-Temperatur-Schätzfolge kann beispielsweise generiert werden, indem das Temperaturmeßsignal einem analogen Signalfilter zugeführt wird, das zumindest einen Signalübertragungspfad mit einer hinsichtlich einer Übertragungsfunktion eine das Temperaturmeßsignal differenzierende Hochpaß-Charakteristik aufweist, mithin als ein durch eine Zeitkonstante charakterisiertes Hochpaß erster Ordnung oder eine durch mehrere Zeitkonstanten charakterisiertes Hochpaß höherer Ordnung ausgelegt ist. Das Signalfilter kann im einfachsten Fall beispielsweise mittels entsprechend verschalteten Widerständen, Kondensatoren und/oder Spulen, mithin mittels eines lediglich mit passiven elektrischen Bauelementen realisierten Filternetzwerk gebildet oder aber auch als aktives, nämlich zudem auch Operationsverstärker aufweisendes Signalfilter realisiert sein. Durch geeignetes Trimmen der das Signalfilter hinsichtlich seiner Übertragungsfunktion definierenden Bauelemente kann das Signalfilter hierbei so eingestellt werden, daß es die erwähnte thermische Trägheit der Meßkette, die den dynamischen Meßfehler während des instationären Übergangsbereichs letztlich verursacht, zumindest teilweise kompensiert, nämlich unter Berücksichtigung auch zeitlicher Änderungen des Temperaturmeßsignals ein entsprechendes Ausgangssignal liefert, das dem Temperaturmeßsignal bzw. dessen zeitlichem Verlauf vorauseilt, mithin gegenüber dem tatsächlichen zeitlichen Verlauf der Vibrationskörper-Temperatur zumindest weniger nachläuft als das Temperaturmeßsignal. Das dementsprechend gleichermaßen analoge Ausgangssignal kann hernach in herkömmlicher Weise digitalisiert, nämlich in die - digitale - Vibrationskörper-Temperatur-Schätzfolge gewandelt werden. Selbstverständlich kann die Vibrationskörper-Temperatur-Schätzfolge z.B. aber auch dadurch generiert werden, daß das Temperaturmeßsignal zunächst digitalisiert, mithin eine Oberflächen-Temperatur-Abtastfolge, $\vartheta_{D2}$, nämlich eine Sequenz von basierend auf dem wenigstens einen Temperaturmeßsignal zu verschiedenen Zeitpunkten $t_m$ ermittelten digitalen Temperaturwerten, die einen zeitlichen Verlauf der Temperatur an der zweiten Oberfläche des Vibrationskörpers approximiert, erzeugt wird, und daß hernach die Vibrationskörper-Temperatur-Schätzfolge davon abgeleitet wird, indem die Oberflächen-Temperatur-Abtastfolge mittels eines entsprechend eingestellten, nämlich die Oberflächen-Temperatur-Abtastfolge differenzierenden digitalen Filters zur Vibrationskörper-Temperatur-Schätzfolge verarbeitet wird. Als digitales Filter kann beispielsweise ein FIR-Filter mit Hochpaßcharakteristik dienen, von dessen Filterkoeffizienten $w_k$ also wenigstens zwei aufeinander folgend von Null verschiedene Filterkoeffizienten $w_i$, $w_{i+1}$ unterschiedliche Vorzeichen aufweisen.

Zur weiteren Verbesserung der Genauigkeit der mittels des erfindungsgemäßen Meßsystems ermittelten Dichte-Meßwerte kann es ferner von Vorteil sein, zusätzlich zur Vibrationskörper-Temperatur auch allfällige mechanische Deformierungen Vibrationskörpers, etwa infolge der sich ändernden Vibrationskörper-Temperatur und/oder infolge von auf den Vibrationskörper einwirkenden Kräften, bzw. daraus resultierende mechanische Spannungen innerhalb des Vibrationskörpers zu erfassen und entsprechend bei der Berechnung der Dichte-Meßwerte entsprechend zu berücksichtigen. Daher weist das Meßsystem gemäß einer weiteren Ausgestaltung der Erfindung einen - hier nicht dargestellten - Dehnungssensor zum Erzeugen eines einen zeitlichen Verlauf einer Vibrationskörper-Deformierung, nämlich einer von der Vibrationskörper-Temperatur und/oder einer auf diesen einwirkenden Kraft abhängigen Deformation des Vibrationskörpers, repräsentierenden Deformierungsmeßsignals auf. Der, beispielsweise als Dehnmeßstreifen ausgebildete, Dehnungssensor ist mit dem Vibrationskörper, nämlich über dessen zweite Oberfläche mechanisch gekoppelt und kann beispielsweise in unmittelbarer Nähe des wenigstens eine Temperatursensors direkt am Vibrationskörper fixiert, beispielsweise aufgeklebt, sein. Basierend auf dem wenigstens einen Deformierungsmeßsignals kann zwecks einer Berücksichtigung der erfaßten Dehnung bei der Generierung des wenigstens einen Dichte-Meßwerts dieses ebenfalls digitalisiert, mithin eine entsprechende Deformierungs-Abtastfolge, nämlich einer Sequenz von basierend auf dem wenigstens einen Deformierungsmeßsignals zu verschiedenen Zeitpunkten ermittelten digitalen Deformierungsmeßwerten, die einen zeitlichen Verlauf der Vibrationskörper-Deformierung approximiert, generiert werden.

**Patentansprüche**

1. Verfahren zum Ermitteln einer Dichte (p)eines einen schwingfähig gehalterten, zu Vibrationen anregbaren, insb. aus Metall bestehenden, Vibrationskörper (10) kontaktierenden Fluids (FL),

- wobei dem Vibrationskörper eine spezifischen Wärmeleitfähigkeit ($\lambda_{10}$), insb. von mehr als 5 W K$^{-1}$ m$^{-1}$, mithin ein davon abhängiger, für einen Wärmedurchgang von einer das Fluid berührenden ersten Oberfläche (10+) des Vibrationskörpers, die eine Fluid-Temperatur ($\vartheta_{FL}$), nämlich eine Temperatur des die ersten Oberfläche kontaktierenden Fluids (FL), aufweist, bis zu einer das Fluid nicht kontaktierenden zweiten Oberfläche (10#) wirksamer Wärmeleitwert ($\Lambda_{10}$) und eine Wärmekapazität ($C_{10}$) innewohnt, und
- wobei eine Vibrationskörper-Temperatur ($\vartheta_{10}$), nämlich eine von der Fluid-Temperatur ($\vartheta_{FL}$) abhängigen Temperatur des Vibrationskörpers, veränderlich ist, welches Verfahren umfaßt:

- Vibrierenlassen des von Fluid kontaktierten Vibrationskörpers in der Weise, daß er zumindest anteilig Resonanzschwingungen ($s_r$), nämlich mechanische Schwingungen mit einer von der Dichte des die erste Oberfläche des Vibrationskörpers kontaktierenden Fluids wie auch von der Vibrationskörper-Temperatur ($\vartheta_{10}$) abhängigen Resonanzfrequenz ($f_r$) ausführt;
- Erfassen von Vibrationen des Vibrationskörpers zum Erzeugen wenigstens eines Schwingungsmeßsignals ($s_{sens1}$), das wenigstens eine Signalkomponente mit einer der Resonanzfrequenz entsprechenden, mithin von der Dichte des Fluids abhängigen Signalfrequenz aufweist;
- Erzeugen einer Frequenz-Abtastfolge ($f_{D1}$), nämlich einer Sequenz von basierend auf dem wenigstens einen Schwingungsmeßsignal zu verschiedenen Zeitpunkten ermittelten digitalen Frequenzwerten, die einen zeitlichen Verlauf der Resonanzfrequenz des Vibrationskörpers approximiert;
- Verwenden der Frequenz-Abtastfolge zum Erzeugen einer verzögerten Frequenz-Abtastfolge ($f_{D2}$), nämlich einer Sequenz von basierend auf der Frequenz-Abtastfolge zu verschiedenen Zeitpunkten ermittelten digitalen Frequenzwerten, die den zeitlichen Verlauf der Resonanzfrequenz des Vibrationskörpers approximiert, derart, daß sich nämliche verzögerte Frequenz-Abtastfolge einem auf eine, insb. sprungförmige, Änderung der Resonanzfrequenz folgenden zeitlichen Verlauf der Resonanzfrequenz langsamer annähert, als die Frequenz-Abtastfolge;
- Verwenden der verzögerten Frequenz-Abtastfolge zum Erzeugen eines die Resonanzfrequenz des vom Fluid kontaktierten Vibrationskörpers repräsentierenden Frequenz-Meßwerts ($X_f$);
- Verwenden eines mit dem Vibrationskörper über dessen zweite Oberfläche thermisch gekoppelten Temperatursensors (61) zum Erzeugen eines einen zeitlichen Verlauf einer Vibrationskörper-Temperatur, nämlich einer von einer Temperatur des den Vibrationskörper an dessen erster Oberfläche kontaktierenden Fluids abhängigen Temperatur des Vibrationskörpers, repräsentierenden Temperaturmeßsignals ($\theta_{sens}$),

-- das, insb. bedingt durch den Wärmeleitwert-($\Lambda_{10}$) und die Wärmekapazität-($C_{10}$) des Vibrationskörpers, einer, insb. aus einer Änderung der Temperatur des den Vibrationskörper an dessen erster Oberfläche kontaktierenden Fluids und/oder einem Fluidaustausch resultierenden, Änderung der Vibrationskörper-Temperatur von einem anfänglichen ersten Temperaturwert ($\Theta_{10,t1}$) auf einen zweiten Temperaturwert ($\Theta_{10,t2}$) lediglich zeitverzögert folgt,
-- mithin nämlichem zweiten Temperaturwert ($\Theta_{10,t2}$) lediglich zeitverzögert entspricht;

- Verwenden des Temperaturmeßsignals zum Erzeugen eines die Vibrationskörper-Temperatur repräsentierenden Temperatur-Meßwerts ($X_\vartheta$); und
- Erzeugen eines die Dichte repräsentierenden Dichte-Meßwerts-($X_\rho$) basierend auf dem Schwingungsmeßsignal sowie dem Temperaturmeßsignal während einer, insb. aus einer Änderung des Temperatur des Vibrationskörpers an dessen erster Oberfläche resultierenden, Änderung der Vibrationskörper-Temperatur, derart, daß eine während des Erzeugens des Dichte-Meßwerts zwischen dem zeitlichen Verlauf der Vibrationskörper-Temperatur und dem Temperaturmeßsignal auftretende, insb. zeitabhängige, Diskrepanz (Err'$_\vartheta$) berücksichtigt ist, insb. derart, daß nämliche Diskrepanz (Err'$_\vartheta$) zumindest teilweise kompensiert ist, wobei das Erzeugen des Dichte-Meßwerts ein Verwenden sowohl des Frequenz-Meßwerts-($X_f$) als auch des Temperatur-Meßwerts ($X_\vartheta$) umfaßt.

2. Vefahren nach einem der vorherigen Ansprüche, weiters umfassend: Erzeugen einer Oberflächen-Temperatur-Abtastfolge ($\vartheta_{D2}$) nämlich einer Sequenz von basierend auf dem wenigstens einen Temperaturmeßsignal zu verschiedenen Zeitpunkten ermittelten digitalen Temperaturwerten, die einen zeitlichen Verlauf der Temperatur an der zweiten Oberfläche des Vibrationskörpers approximiert.

3. Vefahren nach einem der vorherigen Ansprüche, weiters umfassend: Erzeugen einer Vibrationskörper-Temperatur-Schätzfolge ($\vartheta_{D1}$) nämlich einer Sequenz von basierend auf dem wenigstens einen Temperaturmeßsignal zu verschiedenen Zeitpunkten ermittelten digitalen Temperaturwerten, die einen zeitlichen Verlauf der Vibrationskörper-Temperatur approximiert, derart, daß sich nämliche Vibrationskörper-Temperatur-Schätzfolge einem auf eine, insb. sprungförmige und/oder aus einer Änderung der Fluid-Temperatur resultierende, Änderung der Temperatur an der zweiten Oberfläche des Vibrationskörpers folgenden zeitlichen Verlauf der Vibrationskörper-Temperatur schneller annährt, als das Temperaturmeßsignal.

4. Vefahren nach Anspruch 2 und 3, weiters umfassend: Verwenden der Oberflächen-Temperatur-Abtastfolge zum Erzeugen der Vibrationskörper-Temperatur-Schätzfolge, derart, daß sich diese einem auf eine, insb. sprungförmigen und/oder aus einer Änderung der Fluid-Temperatur resultierenden, Änderung der Temperatur an der zweiten Oberfläche des Vibrationskörpers folgenden zeitlichen Verlauf der Vibrationskörper-Temperatur schneller annährt, als die Oberflächen-Temperatur-Abtastfolge.

5. Vefahren nach einem der vorherigen Ansprüche, weiters umfassend: Verwenden eines die Frequenz-Abtastfolge integrierenden, insb. als Tiefpaß erster oder höherer Ordnung ausgelegten und/oder als FIR-Filter ausgebildetes, digitalen Filters zum Erzeugen der verzögerten Frequenz-Abtastfolge.

6. Verfahren nach einem der vorherigen Ansprüche, weiters umfassend:

   - Verwenden eines mit dem Vibrationskörper über dessen zweite Oberfläche mechanisch gekoppelten Dehnungssensors zum Erzeugen eines einen zeitlichen Verlauf einer Vibrationskörper-Deformierung, nämlich einer von der Vibrationskörper-Temperatur und/oder einer auf diesen einwirkenden Kraft abhängigen Deformation des Vibrationskörpers, repräsentierenden Deformierungsmeßsignals;
   - Erzeugen einer Deformierungs-Abtastfolge, nämlich einer Sequenz von basierend auf dem wenigstens einen Deformierungsmeßsignals zu verschiedenen Zeitpunkten ermittelten digitalen Deformierungsmeßwerten, die einen zeitlichen Verlauf der Vibrationskörper-Deformierung approximiert; und
   - Verwenden Deformierungs-Abtastfolge zum Erzeugen des Dichte-Meßwerts.

7. Verfahren nach einem der vorherigen Ansprüche, wobei der Vibrationskörper ein schwingfähig gehaltertes Meßrohr mit einem von einer, insb. aus Metall bestehende, Rohrwand umgebenen Lumen, ist.

8. Verfahren nach einem der vorherigen Ansprüche, wobei der Vibrationskörper dafür eingerichtet ist, Fluid zu führen bzw. von Fluid durchströmt zu werden.

9. Verfahren nach einem der Ansprüche 1 bis 7, wobei der Vibrationskörper dafür eingerichtet ist, in Fluid eingetaucht bzw. von Fluid angeströmt zu werden.

10. Verfahren nach einem der Ansprüche 1 bis 9,

    - wobei der Vibrationskörper eine schwingfähig gehalterte Membran aufweist, und
    - wobei die das Fluid berührende erste Oberfläche des Vibrationskörpers mittels einer ersten Membranfläche und die das Fluid nicht kontaktierende zweite Oberfläche von einer der ersten zweiten Membranfläche gegenüberliegenden zweiten Membranfläche gebildet sind.

11. Meßsystem, zum Ermitteln einer Dichte eines, insb. in einer Rohrleitung strömenden, Fluids, welches Meßsystem eingerichtet ist, nämliche Dichte gemäß einem Verfahren nach einem der vorherigen Ansprüche zu ermitteln, und welches Meßsystem umfaßt:

    - einen Meßwandler (MW)
    - mit wenigstens einem, insb. aus Metall bestehenden, Vibrationskörper (10),

      --- wobei der Vibrationskörper schwingfähig gehaltert und dafür eingerichtet ist, an einer ersten Oberfläche (10+) derart von zu messenden Fluid (FL) kontaktiert zu werden, daß die erste Oberfläche eine Fluid-Temperatur-($\vartheta_{FL}$) nämlich eine Temperatur des die ersten Oberfläche kontaktierenden Fluids, annimmt, und derart vibrierengelassen zu werden, daß er zumindest anteilig Resonanzschwingungen ($s_r$) nämlich mechanische Schwingungen mit einer von der Dichte des Fluids abhängigen Resonanzfrequenz-($f_r$) ausführt, und

--- wobei der Vibrationskörper eine spezifischen Wärmeleitfähigkeit-($\lambda_{10}$), insb. von mehr als 5 W K$^{-1}$ m$^{-1}$, mithin einen davon abhängigen, für einen Wärmedurchgang von der ersten Oberfläche, bis zu einer das Fluid nicht kontaktierenden zweiten Oberfläche (10#) wirksamen Wärmeleitwert-($\Lambda_{10}$) und eine Wärmekapazität-($C_{10}$) aufweist,

-- mit wenigstens einen Schwingungssensor (51) zum Erfassen von Vibrationen des Vibrationskörpers und zum Erzeugen eines Schwingungsmeßsignals, das wenigstens eine Signalkomponente mit einer von der Dichte des Fluids abhängigen Signalfrequenz aufweist, und

--- mit einem mit der zweiten Oberfläche des Vibrationskörpers thermisch gekoppelten Temperatursensor (61) zum Erfassen einer von der Fluid-Temperatur abhängigen Temperatur an der zweiten Oberfläche des Vibrationskörpers, und zum Erzeugen eines einen zeitlichen Verlauf einer Vibrationskörper-Temperatur, nämlich eine von der Fluid-Temperatur abhängigen Temperatur des Vibrationskörpers, repräsentierenden Temperaturmeßsignals,

--- das, insb. bedingt durch den Wärmeleitwert-($\Lambda_{10}$) und die Wärmekapazität-($C_{10}$) des Vibrationskörpers, einer, insb. aus einer Änderung der Temperatur des den Vibrationskörper an dessen erster Oberfläche kontaktierenden Fluids und/oder einem Fluidaustausch resultierenden, Änderung der Vibrationskörper-Temperatur von einem anfänglichen ersten Temperaturwert-($\Theta_{10,t1}$) auf einen zweiten Temperaturwert-($\Theta_{10,t2}$) lediglich zeitverzögert folgt,

--- mithin nämlichem zweiten Temperaturwert lediglich zeitverzögert entspricht; sowie

---eine mit dem Meßwandler elektrische verbundene Elektronik (ME) zum Verarbeiten des Schwingungsmeßsignals und des Temperaturmeßsignals sowie zum Generieren eines die Dichte des Fluids repräsentierenden Dichte-Meßwerts-($X_\rho$) basierend auf sowohl dem Schwingungs- als auch dem Temperaturmeßsignal, wobei die Elektronik dafür eingerichtet ist, eine während des Generierens des Dichte-Meßwerts zwischen dem zeitlichen Verlauf der Vibrationskörper-Temperatur und dem Temperaturmeßsignal auftretende, insb. zeitabhängige, Diskrepanz-($Err'_\vartheta$) zu berücksichtigen, insb. derart, daß nämliche Diskrepanz zumindest teilweise kompensiert wird.

**12.** Meßsystem nach Anspruch 11, wobei der Vibrationskörper dafür eingerichtet ist, Fluid zu führen bzw. von Fluid durchströmt zu werden.

**13.** Meßsystem nach Anspruch 11, wobei der Vibrationskörper dafür eingerichtet ist, in Fluid eingetaucht bzw. von Fluid angeströmt zu werden.

**Claims**

**1.** Procedure designed for determining a density (p) of a fluid (FL) in contact with a vibration body (10), notably metal, which supported in a way that it is capable of vibration and can be excited to vibrate,

- wherein the vibration body has a specific thermal conductivity ($\lambda_{10}$), particularly of more than 5 W K$^{-1}$ m$^{-1}$, and consequently has an effective thermal conductivity value ($\Lambda_{10}$) and a thermal capacity ($C_{10}$) dependent on the specific thermal conductivity for the passage of heat from a first surface (10+) of the vibration body that is contact with the fluid, said surface having a fluid temperature ($\theta_{FL}$), notably a temperature of the fluid (FL) in contact with the first surface, to a second surface (10#) that is not in contact with the fluid, and
- wherein a vibration body temperature ($\theta_{10}$), notably a temperature of the vibration body that depends on the fluid temperature ($\theta_{FL}$), is variable, said procedure comprising the following steps:

- Allowing the vibration body in contact with the fluid to vibrate in such a way that it at least partially executes resonance vibrations ($s_r$), particularly mechanical vibrations, at a resonance frequency ($f_r$) that depends on the density of the fluid in contact with the first surface of the vibration body and on the temperature of the vibration body ($\theta_{10}$);
- Recording of the vibrations of the vibration body to generate at least one vibration measuring signal ($S_{sens1}$) which has at least one signal component with a signal frequency that corresponds to the resonance frequency and is consequently dependent on the density of the fluid;
- Generation of a frequency scan sequence ($f_{D1}$), namely a sequence of digital frequency values that are determined at different times based on the at least one vibration measuring signal, said sequence being an approximation of the development over time of the resonance frequency of the vibration body;
- Use of the frequency scan sequence to generate a delayed frequency scan sequence ($f_{D2}$), namely a sequence of digital frequency values determined at different times based on the frequency scan sequence, said sequence being an approximation of the development over time of the resonance frequency of the vibration body, in such a way that said delayed frequency scan sequence approximates a development over time of the resonance frequency that follows a change in the resonance frequency, particularly an erratic change, more slowly than the frequency scan sequence;
- Use of the delayed frequency scan sequence to generate a frequency measured value ($X_f$) that represents the resonance frequency of the vibration body in contact with the fluid;
- Use of a temperature sensor (61) that is thermally coupled with the vibration body via the vibration body's second surface to generate a temperature measuring signal ($\theta_{sens}$) that represents a development over time of a vibration body temperature, particularly a temperature of the vibration body that depends on a temperature of the fluid in contact with the vibration body at its first surface,

-- wherein, due in particular to the thermal conductivity value ($\Lambda_{10}$) and the thermal capacity ($C_{10}$) of the vibration body, said signal follows, with a simple time delay, a change in the vibration body temperature from an initial first temperature value ($\theta_{10,t1}$) to a second temperature value ($\theta_{10,t2}$), particularly a change resulting from a change in the temperature of the fluid in contact with the vibration body at the vibration body's first surface and/or an exchange of fluid,
-- corresponding consequently to said second temperature value ($\theta_{10,t2}$) with a simple time delay;

- Use of the temperature measuring signal to generate a temperature measured value ($X_\theta$) that represents the vibration body temperature; and
- Generation of a density measured value ($X_\rho$) that represents the density, based on the vibration measuring signal and the temperature measuring signal during a change in the vibration body temperature, particularly one resulting from a change in the temperature of the vibration body at the body's first surface, in such a way that a discrepancy ($Err'_\theta$), particularly a time-dependent discrepancy, that occurs during the generation of the density measured value between the development over time of the vibration body temperature and the temperature measuring signal is taken into consideration, particularly in such a way that said discrepancy ($Err'_\theta$) is at least partially compensated for, wherein the generation of the density measured value comprises the use of both the frequency measured value ($X_f$) and of the temperature measured value ($X_\theta$).

2. Procedure as claimed in one of the previous claims, further comprising: the generation of a surface temperature scan sequence ($\theta_{D2}$), notably a sequence of digital temperature values determined at different times on the basis of the at least one temperature measuring signal, said sequence being an approximation of the development over time of the temperature at the second surface of the vibration body.

3. Procedure as claimed in one of the previous claims, further comprising: the generation of an estimation sequence of the vibration body temperature ($\theta_{D1}$), notably a sequence of digital temperature values determined at different times on the basis of the at least one temperature measuring signal, said sequence being an approximation of a development over time of the vibration body temperature in such a way that said estimation sequence of the vibration body temperature approaches a development over time of the vibration body temperature following a change in the temperature at the second surface of the vibration body, particularly an erratic change and/or a change resulting from a change in the fluid temperature, more quickly than the temperature measuring signal.

4. Procedure as claimed in Claim 2 and 3, further comprising: the use of the surface temperature scan sequence to generate the estimation sequence of the vibration body temperature in such a way that said sequence approaches a development over time of the vibration body temperature that follows a change in the temperature at the second surface of the vibration body, particularly an erratic change and/or a change resulting from a change in the fluid temperature, more quickly than the surface temperature scan sequence.

5. Procedure as claimed in one of the previous claims, further comprising: the use of a digital filter, which integrates the frequency scan sequence, particularly a filter that is designed as a first order or higher order low-pass filter and/or as an FIR filter, to generate the delayed frequency scan sequence.

6. Procedure as claimed in one of the previous claims, further comprising:

- Use of a distention sensor that is mechanically coupled with the vibration body via the vibration body's second surface to generate a deformation measuring signal that represents a development over time of a vibration body deformation, particularly a deformation of the vibration body that depends on the vibration body temperature and/or on a force acting on the vibration body;

- Generation of a deformation scan sequence, notably a sequence of digital deformation measured values determined at different times based on the at least one deformation measuring signal, said sequence being an approximation of a development over time of the vibration body deformation; and
- Use of the deformation scan sequence to generate the density measured value.

7. Procedure as claimed in one of the previous claims, wherein the vibration body is a measuring tube that is supported in a manner capable of vibration, with a cavity surrounded by a pipe wall, particularly a metal pipe wall.

8. Procedure as claimed in one of the previous claims, wherein the vibration body is designed to conduct fluid or to have fluid flow through it.

9. Procedure as claimed in one of the Claims 1 to 7, wherein the vibration body is designed to be immersed in fluid or to have fluid flow to it.

10. Procedure as claimed in one of the Claims 1 to 9,

   - wherein the vibration body has a membrane supported in a manner capable of vibration, and
   - wherein the first surface of the vibration body that is in contact with the fluid is formed by a first membrane surface and the second surface, which is not in contact with the fluid, is formed by a second membrane surface that is opposite the first membrane surface.

11. Measuring system for determining a density of a fluid, particularly a fluid flowing through a pipe, said system being designed to determine said density in accordance with a procedure as claimed in one of the previous claims, and said system comprising:

   - a transducer (MW)
   - with at least one vibration body (10), particularly a metal vibration body,

      --- wherein the vibration body is supported in a manner capable of vibration and is designed to be in contact with a fluid (FL) under measurement at a first surface (10+) in such a way that the first surface adopts a fluid temperature ($\theta_{FL}$), notably a temperature of the fluid in contact with the first surface, and is allowed to vibrate in such a way that it at least partially executes resonance vibrations ($s_r$), notably mechanical vibrations, at a resonance frequency ($f_r$) that depends on the density of the fluid, and
      --- wherein the vibration body has a specific thermal heat conductivity ($\lambda_{10}$), particularly of more than W K$^{-1}$ m$^{-1}$, and therefore has an effective thermal conductivity value ($\Lambda_{10}$) and a thermal capacity ($C_{10}$) dependent on the specific thermal heat conductivity for the passage of heat from the first surface to a second surface (10#) that is not in contact with the fluid,
      -- with at least one vibration sensor (51) designed to capture vibrations of the vibration body and to generate a vibration measuring signal that has at least one signal component with a signal frequency the depends on the density of the fluid, and
      --- with a temperature sensor (61) thermally coupled with the second surface of the vibration body to capture a temperature at the second surface of the vibration body that depends on the fluid temperature, and to generate a temperature measuring signal that represents a development over time of a vibration body temperature, namely a temperature of the vibration body that depends on the fluid temperature,
      --- wherein, due in particular to the thermal conductivity value ($\Lambda_{10}$) and the thermal capacity ($C_{10}$) of the vibration body, said signal follows, with a simple time delay, a change in the vibration body temperature from an initial first temperature value ($\theta_{10,t1}$) to a second temperature value ($\theta_{10,t2}$), particularly a change resulting from a change in the temperature of the fluid in contact with the vibration body at the vibration body's first surface and/or an exchange of fluid,
      --- corresponding consequently to said second temperature value, with a simple time delay;
      -- as well as electronics (ME) electrically connected to the transducer (ME) for processing the vibration measuring signal and the temperature measuring signal and to generate a density measured value ($X_\rho$) that represents the density of the fluid, based on both the vibration measuring signal and the temperature measuring signal, wherein the electronics are designed to factor in a, particularly time-dependent, discrepancy (Err'$_\theta$) that occurs during the generation of the density measured value between the development over time of the vibration body temperature and the temperature measuring signal, particularly in such a way that said discrepancy is at least partially compensated for.

**12.** Measuring system as claimed in Claim 11, wherein the vibration body is designed to conduct fluid or to have fluid flow through.

**13.** Measuring system as claimed in Claim 11, wherein the vibration body is designed to be immersed in fluid or to have fluid flow to it.

## Revendications

**1.** Procédé destiné à la détermination d'une densité (p) d'un fluide (FL) en contact avec un corps de vibration (10), notamment métallique, maintenu de façon apte à vibrer et pouvant être excité en vibrations,

- pour lequel le corps de vibration présente une conductibilité thermique spécifique ($\lambda_{10}$), notamment supérieure à 5 W K$^{-1}$ m$^{-1}$, et présente par conséquent un coefficient de conductibilité thermique efficace ($\Lambda_{10}$) et une capacité thermique ($C_{10}$) en dépendant, pour un passage de chaleur d'une première surface (10+) du corps de vibration en contact avec le fluide, qui présente une température du fluide ($\theta_{FL}$), notamment une température du fluide (FL) en contact avec la première surface, vers une deuxième surface (10#), qui n'est pas en contact avec le fluide, et
- pour lequel une température du corps de vibration ($\theta_{10}$), notamment une température du corps de vibration dépendant de la température du fluide ($\theta_{FL}$), est variable, lequel procédé comprend :

- Mise en vibration du corps de vibration en contact avec le fluide, de telle manière qu'il exécute au moins partiellement des vibrations de résonance ($s_r$), notamment des vibrations mécaniques à une fréquence de résonance ($f_r$) dépendant de la densité du fluide en contact avec la première surface du corps de vibration, ainsi que de la température du corps de vibration ($\theta_{10}$) ;
- Mesure des vibrations du corps de vibration afin de générer au moins un signal de mesure de vibration ($S_{sens1}$), lequel présente au moins une composante de signal avec une fréquence de signal dépendant de la densité du fluide, correspondant à la fréquence de résonance ;
- Génération d'une séquence d'échantillonnage de fréquence ($f_{D1}$), notamment une séquence de valeurs de fréquence numériques déterminées à différents instants et sur la base de l'au moins un signal de mesure de vibration, qui est une approximation d'un déroulement temporel de la fréquence de résonance du corps de vibration ;
- Utilisation de la séquence d'échantillonnage de fréquence pour la génération d'une séquence d'échantillonnage de fréquence ($f_{D2}$) décalée dans le temps, notamment une séquence de valeurs de fréquence numériques déterminées à différents instants et sur la base de la séquence d'échantillonnage de fréquence, qui est une approximation du déroulement temporel de la fréquence de résonance du corps de vibration, de telle sorte que la même séquence d'échantillonnage de fréquence décalée dans le temps s'approche d'un déroulement temporel de la fréquence de résonance consécutif à un changement, notamment sous forme d'un saut, plus lentement que la séquence d'échantillonnage de fréquence ;
- Utilisation de la séquence d'échantillonnage de fréquence décalée dans le temps pour la génération d'une valeur mesurée de fréquence ($X_f$) représentant la fréquence de résonance du corps de vibration en contact avec le fluide ;
- Utilisation d'un capteur de température (61) couplé thermiquement avec le corps de vibration par l'intermédiaire de sa deuxième surface, lequel capteur est destiné à générer un signal de mesure de température ($\theta_{sens}$) représentant un déroulement temporel d'une température du corps de vibration, notamment dépendant d'une température du fluide en contact avec la première surface du corps de vibration,

-- qui suit, simplement de façon décalée dans le temps, notamment en raison du coefficient de conductibilité thermique ($\Lambda_{10}$) et de la capacité thermique ($C_{10}$) du corps de vibration, un changement de la température du corps de vibration, d'une première valeur de température initiale ($\theta_{10,t1}$) à une deuxième valeur de température ($\theta_{10,t2}$), notamment résultant d'un changement de la température du fluide en contact avec la première surface du corps de vibration et/ou d'un échange de fluide,
-- qui correspond par conséquent à la même deuxième valeur de température ($\theta_{10,t2}$), simplement décalée dans le temps ;

- Utilisation du signal de mesure de température pour la génération d'une valeur mesurée de température ($X_\theta$) représentant la température du corps de vibration ; et
- Génération d'une valeur mesurée de densité ($X_\rho$) représentant la densité et basée sur le signal de mesure de vibration ainsi que sur le signal de mesure de température pendant un changement de la température du corps de vibration, notamment résultant d'un changement de la température du corps de vibration au niveau de sa première surface, de telle sorte que l'écart (Err'$_\theta$), notamment fonction du temps, apparaissant pendant la génération de la valeur mesurée de densité, entre le déroulement temporel de la température du corps de vibration et le signal de mesure de température, soit pris en compte, notamment de telle manière que le même écart (Err'$_\theta$) soit compensé au moins partiellement, la génération de la valeur mesurée de densité comprenant une utilisation à la fois de la valeur mesurée de fréquence (X$_f$) et de la valeur mesurée de température (X$_\theta$)

2. Procédé selon l'une des revendications précédentes, comprenant en outre :

Génération d'une séquence d'échantillonnage de la température de surface ($\theta_{D2}$), notamment d'une séquence de valeurs de température numériques déterminées en différents instants et basées sur l'au moins un signal de mesure de température, laquelle séquence est une approximation de la température sur la deuxième surface du corps de vibration.

3. Procédé selon l'une des revendications précédentes, comprenant en outre :

Génération d'une séquence d'estimation de la température du corps de vibration ($\theta_{D1}$), notamment d'une séquence de valeurs de température numériques déterminées en différents instants et basées sur l'au moins un signal de mesure de température, laquelle séquence est une approximation d'un déroulement temporel de la température du corps de vibration, de telle sorte que la même séquence d'estimation de la température du corps de vibration s'approche d'un déroulement temporel de la température du corps de vibration suite à un changement, notamment en forme d'un saut, et/ou résultant d'un changement de la température du fluide, sur la deuxième surface du corps de vibration, plus rapidement que le signal de mesure de température.

4. Procédé selon la revendication 2 et 3, comprenant en outre :

Utilisation de la séquence d'échantillonnage de la température de surface destinée à générer la séquence d'estimation de la température du corps de vibration, de telle sorte que celle-ci s'approche d'un déroulement temporel de la température du corps de vibration suite à un changement, notamment en forme d'un saut, et/ou résultant d'un changement de la température du fluide, sur la deuxième surface du corps de vibration, plus rapidement que la séquence d'échantillonnage de la température de surface.

5. Procédé selon l'une des revendications précédentes, comprenant en outre :

Utilisation d'un filtre numérique intégrant la séquence d'échantillonnage de fréquence, notamment conçu en tant que passe-bas de premier ordre ou d'ordre supérieur et/ou en tant que filtre FIR, lequel filtre est destiné à générer la séquence d'échantillonnage de fréquence décalée dans le temps.

6. Procédé selon l'une des revendications précédentes, comprenant en outre :

- Utilisation d'un capteur d'allongement couplé mécaniquement avec le corps de vibration par le biais de sa deuxième surface, lequel capteur est destiné à générer un signal de mesure de déformation représentant un déroulement temporel d'une déformation du corps de vibration, notamment une déformation du corps de vibration dépendant de la température du corps de vibration et/ou d'une déformation du corps de vibration dépendant de la force agissant sur celui-ci ;
- Génération d'une séquence d'échantillonnage de déformation, notamment une séquence de valeurs mesurées de déformation numériques déterminées en différents instants et basées sur l'au moins un signal de mesure de déformation, laquelle séquence est une approximation d'un déroulement temporel de la déformation du corps de vibration ; et
- Utilisation de la séquence d'échantillonnage de déformation en vue de générer la valeur mesurée de densité.

7. Procédé selon l'une des revendications précédentes, pour lequel le corps de vibration est un tube de mesure maintenu de façon apte à vibrer avec un canal intérieur entouré par une paroi de tube, notamment métallique.

8. Procédé selon l'une des revendications précédentes, pour lequel le corps de vibration est conçu de telle manière à guider le fluide ou à être traversé par le fluide.

9. Procédé selon l'une des revendications 1 à 7, pour lequel le corps de vibration est conçu de telle manière à être immergé dans le fluide ou à être balayé par le fluide.

10. Procédé selon l'une des revendications 1 à 9,

  - pour lequel le corps de vibration présente une membrane maintenue de façon apte à vibrer, et
  - pour lequel la première surface en contact avec le fluide du corps de vibration est formée par une première surface de membrane et la deuxième surface, qui n'est pas en contact avec le fluide, est formée par une deuxième surface de membrane située à l'opposé de la première surface de membrane.

11. Système de mesure destiné à la détermination d'une densité d'un fluide, s'écoulant notamment dans une conduite, lequel système de mesure est conçu de telle manière à déterminer la même densité conformément à un procédé selon l'une des revendications précédentes, et lequel système de mesure comprend :

  - un transducteur (MW)
  - avec au moins un corps de vibration (10), notamment métallique,

    --- pour lequel le corps de vibration est maintenu de façon apte à vibrer et conçu de telle sorte à être en contact avec le fluide à mesurer (FL) au niveau d'une première surface (10+), de telle manière que la première surface adopte une température du fluide ($\theta_{FL}$), notamment une température du fluide en contact avec la première surface, et est mis en vibration de telle manière à exécuter au moins partiellement des vibrations de résonance ($s_r$), notamment des vibrations mécaniques, à une fréquence de résonance ($f_r$) dépendant de la densité du fluide, et
    --- pour lequel le corps de vibration présente une conductibilité thermique spécifique ($\lambda_{10}$), notamment supérieure à 5 W K$^{-1}$ m$^{-1}$, et par conséquent un coefficient de conductibilité thermique efficace ($\Lambda_{10}$) et une capacité thermique ($C_{10}$) en dépendant, pour un passage de chaleur de la première surface jusqu'à une deuxième surface (10#) qui n'est pas en contact avec le fluide,
    -- avec au minimum un capteur de vibrations (51) destiné à mesurer les vibrations du corps de vibration et à générer un signal de mesure de vibration, qui présente au moins une composante de signal avec une fréquence de signal dépendant de la densité du fluide, et
    --- avec un capteur de température (61) couplé thermiquement avec la deuxième surface du corps de vibration, lequel capteur est destiné à mesurer une température dépendant de la température du fluide sur la deuxième surface du corps de vibration, et destiné à générer un signal de mesure de température représentant un déroulement temporel d'une température du corps de vibration, notamment une température dépendant de la température du fluide,
    --- qui suit, simplement de façon décalée dans le temps, notamment en raison du coefficient de conductibilité thermique ($\Lambda_{10}$) et de la capacité thermique ($C_{10}$) du corps de vibration, un changement de la température du corps de vibration, d'une première valeur de température initiale ($\theta_{10,t1}$) à une deuxième valeur de température ($\theta_{10,t2}$), notamment résultant d'un changement de la température du fluide en contact avec la première surface du corps de vibration et/ou d'un échange de fluide,
    --- qui correspond par conséquent à la même deuxième valeur de température, simplement décalée dans le temps ; ainsi que
    -- une électronique (ME) reliée électriquement avec le transducteur, destinée à traiter le signal de mesure de vibration et le signal de mesure de température, ainsi qu'à générer une valeur mesurée de densité ($X_\rho$) représentant la densité du fluide, basée à la fois sur le signal de mesure de vibration et le signal de mesure de température, l'électronique étant conçue de telle sorte à prendre en compte un écart (Err'$_\theta$), notamment fonction du temps, apparaissant pendant la génération de la valeur mesurée de densité, entre le déroulement temporel de la température du corps de vibration et le signal de mesure de température, notamment de telle sorte que le même écart soit compensé au moins partiellement.

12. Système de mesure selon la revendication 11, pour lequel le corps de vibration est conçu de telle manière à guider le fluide ou à être traversé par le fluide.

13. Système de mesure selon la revendication 11, pour lequel le corps de vibration est conçu de telle manière à être immergé dans le fluide ou balayé par le fluide.

*Fig. 1*

EP 2 795 287 B1

*Fig. 2*

Fig. 3

EP 2 795 287 B1

Fig. 4

Fig. 5

*Fig. 6a*

Fig. 6b

*Fig. 6c*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 564682 A
- EP 919793 A
- US 20070028663 A
- US 20080127745 A
- US 20100083752 A
- US 20100236323 A
- US 20110219872 A
- US 4524610 A
- US 4801897 A
- US 5027662 A
- US 5054326 A
- US 5796011 A
- US 5965824 A
- US 6073495 A
- US 6138507 A
- US 6148665 A
- US 6044694 B
- US 6389891 B
- US 6651513 B
- US 6688176 B
- US 6711942 B
- US 6845663 B
- US 6912904 B
- US 6938475 B
- US 7040179 B
- US 7102528 B
- US 7272525 B
- US 7549319 B
- US 7681445 B
- US 7874199 B
- WO 0019175 A
- WO 0102816 A
- WO 0129519 A
- WO 8802853 A
- WO 9301473 A
- WO 9319348 A
- WO 9321505 A
- WO 9421999 A
- WO 9503528 A
- WO 9516897 A
- WO 9529385 A
- WO 9802725 A
- US 6311136 B
- US 4777833 A
- US 4879911 A
- US 5009109 A
- US 5024104 A
- US 5050439 A
- US 5804741 A
- US 5869770 A
- US 6311136 A
- US 7360451 B
- US 6666098 B
- US 20100236338 A
- US 20100242623 A
- US 20100242624 A
- US 5602345 A
- US 5731527 A
- US 6006609 A
- US 6513393 B
- US 6840109 B
- US 6920798 B
- US 7017424 B
- US 7284449 B
- US 6910366 B
- US 5576500 A